(19) 

Europäisches Patentamt
European Patent Office
Office européen des brevets

(11) **EP 4 642 115 A1**

(12) **EUROPEAN PATENT APPLICATION**
published in accordance with Art. 153(4) EPC

(43) Date of publication:
**29.10.2025 Bulletin 2025/44**

(21) Application number: **22968931.0**

(22) Date of filing: **22.12.2022**

(51) International Patent Classification (IPC):
**H04W 64/00** $^{(2009.01)}$    **H04W 72/0446** $^{(2023.01)}$
**H04W 72/40** $^{(2023.01)}$    **H04L 5/00** $^{(2006.01)}$

(52) Cooperative Patent Classification (CPC):
**H04L 5/00; H04W 64/00; H04W 72/0446;
H04W 72/40**

(86) International application number:
**PCT/CN2022/140987**

(87) International publication number:
**WO 2024/130632 (27.06.2024 Gazette 2024/26)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **GUANGDONG OPPO MOBILE
TELECOMMUNICATIONS
CORP., LTD.
Dongguan, Guangdong 523860 (CN)**

(72) Inventor: **ZHANG, Shichang
Dongguan, Guangdong 523860 (CN)**

(74) Representative: **RGTH
Patentanwälte PartGmbB
Neuer Wall 10
20354 Hamburg (DE)**

(54) **WIRELESS COMMUNICATION METHOD, TERMINAL DEVICE, AND NETWORK DEVICE**

(57)    A wireless communication method, a terminal device, and a network device. The method comprises: in accordance with one or more sidelink positioning reference signal (SL PRS) resources configured in a time slot, a terminal device sending an SL PRS and/or a physical channel, the physical channel being used for indicating the sending of the SL PRS, and the SL PRS resources corresponding to one or more initial orthogonal frequency division multiplexing (OFDM) symbol positions that can be used for sending an SL PRS.

<u>200</u>

```
┌─────────────────┐                    ┌─────────────────┐
│ Terminal device │                    │ Network device  │
└─────────────────┘                    └─────────────────┘
        │         S201, resource                 │
        │◀ ─ ─ configuration information ─ ─ ─ ─ ┤
        │                                        │
┌───────┴──────────────────────────────┐        │
│ S210, an SL PRS and/or a physical     │        │
│ channel is transmitted according to   │        │
│ one or more resources configured      │        │
│ within a slot, where each resource    │        │
│ corresponds to one or more starting   │        │
│ OFDM symbol positions available for   │        │
│ transmitting the SL PRS and/or the    │        │
│ physical channel                      │        │
└───────┬──────────────────────────────┘        │
        │                                        │
```

FIG. 13

EP 4 642 115 A1

**Description**

## TECHNICAL FIELD

Embodiments of the present application relate to the field of communications, and in particular, to a wireless communication method, a terminal device, and a network device.

## BACKGROUND

In some scenarios, in order to improve positioning accuracy, especially to achieve positioning of a terminal device located outside coverage of a cellular network, positioning based on a sidelink (SL) positioning reference signal (PRS) is introduced.

On an unlicensed spectrum, the terminal device accesses a channel through Listen Before Talk (LBT) mechanism, so, the time for the terminal device to complete LBT is uncertain. If the terminal device fails to complete LBT before an SL PRS resource, a transmission opportunity will be missed. Therefore, how to perform SL PRS transmission or SL PRS scheduling is an urgent problem to be solved.

## SUMMARY

The present application provides a wireless communication method, a terminal device and a network device, which are beneficial to improving the probability of transmitting an SL PRS on an unlicensed spectrum, so as to improve positioning accuracy.

In a first aspect, a wireless communication method is provided. The method includes: transmitting, by a terminal device, a sidelink positioning reference signal (SL PRS) and/or a physical channel according to one or more SL PRS resources configured within a slot, the physical channel being used for indicating transmission of the SL PRS, where each SL PRS resource corresponds to one or more starting orthogonal frequency-division multiplexing (OFDM) symbol positions available for transmitting the SL PRS.

In a second aspect, a wireless communication method is provided. The method includes: transmitting, by a terminal device, a sidelink positioning reference signal (SL PRS) according to an SL PRS resource configured within a slot; and transmitting a physical channel according to a physical channel resource configured within the slot, the physical channel being used for indicating transmission of the SL PRS; where the physical channel resource is configured with multiple starting orthogonal frequency-division multiplexing (OFDM) symbol positions available for transmitting the physical channel, the SL PRS resource being subsequent to the physical channel resource; or the SL PRS resource is configured with multiple starting OFDM symbol positions available for transmitting the SL PRS, the physical channel resource being subsequent to the SL PRS resource.

In a third aspect, a wireless communication method is provided. The method includes: configuring, by a network device, one or more sidelink positioning reference signal (SL PRS) resources within a slot for a terminal device, where the one or more SL PRS resources are used for the terminal device to transmit an SL PRS and/or a physical channel, the physical channel is used for indicating transmission of the SL PRS, and each SL PRS resource corresponds to one or more starting orthogonal frequency-division multiplexing (OFDM) symbol positions available for transmitting the SL PRS.

In a fourth aspect, a wireless communication method is provided. The method includes: configuring, by a network device, a sidelink positioning reference signal (SL PRS) resource and a physical channel resource within a slot for a terminal device, where the physical channel resource is configured with multiple starting orthogonal frequency-division multiplexing (OFDM) symbol positions available for transmitting a physical channel, the SL PRS resource being subsequent to the physical channel resource; or the SL PRS resource is configured with multiple starting OFDM symbol positions available for transmitting an SL PRS, the physical channel resource being subsequent to the SL PRS resource.

In a fifth aspect, a terminal device is provided to perform the method in any one of the first aspect to the second aspect or in various implementations thereof. Specifically, the terminal device includes a functional module, configured to perform the method in any one of the first aspect to the second aspect or in various implementations thereof.

In a sixth aspect, a network device is provided to perform the method in any one of the third aspect to the fourth aspect or in various implementations thereof. Specifically, the network device includes a functional module, configured to perform the method in any one of the third aspect to the fourth aspect or in various implementations thereof.

In a seventh aspect, a terminal device is provided and includes a processor and a memory. The memory is configured to store a computer program, and the processor is configured to call the computer program stored in the memory and run the computer program, to perform the method in any one of the first aspect to the second aspect or in various implementations thereof.

In an eighth aspect, a network device is provided and includes a processor and a memory. The memory is configured to store a computer program, and the processor is configured to call the computer program stored in the memory and run the computer program, to perform the method in any one of the third aspect to the fourth aspect or in various implementations thereof.

In a ninth aspect, a chip is provided, configured to implement the method in any one of the first aspect to the fourth aspect or various implementations thereof. Specifically, the chip includes: a processor, configured to call a computer program stored in a memory and run the computer program, to enable a device equipped with the equipment to perform the method in any one of the first aspect to the fourth aspect or in various implementations thereof.

In a tenth aspect, a computer-readable storage medium is provided, configured to store a computer program, where the computer program enables a computer to perform the method in any one of the first aspect to the fourth aspect or in various implementations thereof.

In an eleventh aspect, a computer program product is provided and includes computer program instructions, where the computer program instructions enable a computer to perform the method in any one of the first aspect to the fourth aspect or in various implementations thereof.

In a twelfth aspect, a computer program is provided which, when executed on a computer, enables the computer to perform the method in any one of the first aspect to the fourth aspect or in various implementations thereof.

Through the above technical solutions, one or more resources are configured within the slot, each resource corresponds to one or more starting OFDM symbol positions available for transmitting the SL PRS and/or the physical channel, and the terminal device may initiate transmission of the SL PRS and/or the physical channel form the starting OFDM symbol positions available for transmitting the SL PRS and/or the physical channel corresponding to the one or more resources, which is beneficial to improving the probability of transmitting the SL PRS on the unlicensed spectrum, so as to improve the positioning accuracy.

BRIEF DESCRIPTION OF THE DRAWINGS

FIG. 1 is a schematic diagram of a communication system architecture provided in embodiments of the present application.

FIG. 2 is a schematic diagram of another communication system architecture provided in the embodiments of the present application.

FIG. 3 is a schematic diagram of a slot structure in NR-V2X.

FIG. 4 is a schematic diagram of another slot structure in NR-V2X.

FIG. 5 is a schematic diagram of time domain positions of 4 DMRS symbols when a PSSCH occupies 13 symbols.

FIG. 6 is a schematic diagram of a DMRS port pattern.

FIG. 7 is a schematic diagram of a frequency domain range of a resource pool of a PSCCH and PSSCH.

FIG. 8 is a schematic diagram of a subframe structure of an NR system.

FIG. 9 is a schematic diagram of a determining manner of a time domain resource in an NR-V2X system.

FIG. 10 is a schematic diagram of an interleaved resource block.

FIG. 11 is a schematic diagram of a frame structure based on interleaved resource blocks.

FIG. 12 is a schematic diagram of an RB set.

FIG. 13 is a schematic interaction diagram of a wireless communication method provided according to the embodiments of the present application.

FIG. 14 is a schematic diagram of resources according to an embodiment of the present application.

FIG. 15 is a schematic diagram of an RE offset of a resource according to an embodiment of the present application.

FIG. 16 is a schematic diagram of a resource according to another embodiment of the present application.

FIG. 17 is a schematic interaction diagram of a wireless communication method provided according to the embodiments of the present application.

FIG. 18 is a schematic block diagram of a terminal device provided according to the embodiments of the present application.

FIG. 19 is a schematic block diagram of another terminal device provided according to the embodiments of the present application.

FIG. 20 is a schematic block diagram of a network device provided according to the embodiments of the present application.

FIG. 21 is a schematic block diagram of a network device provided according to the embodiments of the present application.

FIG. 22 is a schematic block diagram of a communication device provided according to the embodiments of the present application.

FIG. 23 is a schematic block diagram of a chip provided according to the embodiments of the present application.

FIG. 24 is a schematic block diagram of a communication system provided according to the embodiments of the present application.

## DETAILED DESCRIPTION

Technical solutions of the embodiments of the present application will be described below in conjunction to the accompanying drawings in the embodiments of the present application. It is apparent that the described embodiments are merely part but not all of embodiments of the present application. With respect to the embodiments of the present application, all other embodiments obtained by those skilled in the art without creative efforts shall fall within the protection scope of the present application.

The technical solutions of the embodiments of the present application may be applied to various communication systems, such as: a global system of mobile communication (GSM) system, a code division multiple access (CDMA) system, a wideband code division multiple access (WCDMA) system, a general packet radio service (GPRS), a long term evolution (LTE) system, an advanced long term evolution (LTE-A) system, a new radio (NR) system, an evolution system of the NR system, an LTE-based access to unlicensed spectrum (LTE-U) system, an NR-based access to unlicensed spectrum (NR-U) system, a non-terrestrial communication network (Non-Terrestrial Network, NTN) system, a universal mobile telecommunication system (UMTS), wireless local area networks (WLANs), wireless fidelity (Wi-Fi), a fifth-generation communication (5th-Generation, 5G) communication system or other communication systems.

Generally speaking, traditional communication systems support a limited quantity of connections, which is easy to be implemented. However, with development of the communication technology, mobile communication systems will support not only the traditional communication, but also, for example, device to device (D2D) communication, machine to machine (M2M) communication, machine type communication (MTC), vehicle to vehicle (V2V) communication, vehicle to everything (V2X) communication or the like. The embodiments of the present application may also be applied to these communication systems.

Optionally, the communication system in the embodiments of the present application may be applied to a carrier aggregation (CA) scenario, may also be applied to a dual connectivity (DC) scenario, and may also be applied to a standalone (SA) network deployment scenario.

Optionally, the communication system in the embodiments of the present application may be applied to an unlicensed spectrum, where the unlicensed spectrum may also be considered as a shared spectrum; or the communication system in the embodiments of the present application may be applied to a licensed spectrum, where the licensed spectrum may also be considered as an unshared spectrum.

In the embodiments of the present application, various embodiments are described in conjunction with a network device and a terminal device, where the terminal device may also be referred to as user equipment (UE), an access terminal, a user unit, a user station, a mobile station, a mobile platform, a remote station, a remote terminal, a mobile device, a user terminal, a terminal, a wireless communication device, a user agent, a user apparatus, or the like.

The terminal device may be a station (STATION, ST) in the WLAN, which may be a cellular phone, a cordless phone, a session initiation protocol (SIP) phone, a wireless local loop (WLL) station, a personal digital assistant (PDA) device, a handheld device with wireless communication functions, a computing device or other processing device connected to a wireless modem, an in-vehicle device, a wearable device, a terminal device in a next generation communication system (e.g., an NR network), a terminal device in a future evolved public land mobile network (PLMN), or the like.

In the embodiments of the present application, the terminal device may be deployed on land, including indoors or outdoors, handheld, wearable or vehicle; the terminal device may be deployed on water (e.g., on a steamship); and the terminal device may also be deployed in air (e.g., on an airplane, on a balloon, or on a satellite).

In the embodiments of the present application, the terminal device may be a mobile phone, a pad, a computer with a wireless transceiver function, a virtual reality (VR) terminal device, an augmented reality (AR) terminal device, a wireless terminal device in industrial control, a wireless terminal device in self-driving, a wireless terminal device in remote medical, a wireless terminal device in smart grid, a wireless terminal device in transportation safety, a wireless terminal device in smart city, a wireless terminal device in smart home, or the like.

As an example but not a limitation, in the embodiments of the present disclosure, the terminal device may also be a wearable device. The wearable device may also be referred to as a wearable smart device, which is a generic term for a wearable device by using wearable technology and intelligent design for everyday wear, such as glasses, gloves, a watch, clothing, or shoes. The wearable device is a portable device that is worn directly on a body, or integrated into a user's clothing or accessories. The wearable device is not only a hardware device, but also achieves powerful functions through software supporting as well as data interaction or cloud interaction. Generalized wearable smart devices includes full-featured, large-sized devices that may implement full or partial functionality without relying on smart phones, such as a smart watch or smart glasses, and devices that focus on a certain type of application functionality only and need to be used in conjunction with other devices (such as smart phones), such as various smart bracelets or smart jewelries for monitoring physical signs.

In the embodiments of the present application, the network device may be a device used for communicating with a mobile device. The network device may be an access point (AP) in the WLAN, a base station (Base Transceiver Station, BTS) in the GSM or CDMA, or may also be a base station (NodeB, NB) in the WCDMA, or may also be an evolutional base station (Evolutional Node B, eNB or eNodeB) in the LTE, or a relay station or an access point, or a network device or base station (gNB) in an in-vehicle device, a wearable device and the NR network, a network device in the future evolved PLMN network, a network device in the NTN network, or the like.

As an example but not a limitation, in the embodiments of the present application, the network device may have mobile characteristics. For example, the network device may be a mobile device. Optionally, the network device may be a satellite or a balloon station. For example, the satellite may be a low earth orbit (LEO) satellite, a medium earth orbit (MEO) satellite, a geostationary earth orbit (GEO) satellite, a high elliptical orbit (HEO) satellite, or the like. Optionally, the network device may also be a base station disposed on land, water, and other places.

In the embodiments of the present application, the network device may provide services for a cell, and the terminal device communicates with the network device through transmission resources (e.g., frequency domain resources, or spectrum resources) used by the cell. The cell may be a cell corresponding to the network device (e.g., the base station). The cell may belong to a macro base station or may belong to a base station corresponding to a small cell. The small cell here may include a metro cell, a micro cell, a pico cell, a femto cell, or the like. These small cells have characteristics of small coverage range and low transmission power, which are applicable for providing a data transmission service with high speed.

It should be understood that the terms "system" and "network" are often used interchangeably herein. The term "and/or" herein is only an association relationship to describe associated objects, indicating that there may be three kinds of relationships between associated objects, for example, "A and/or B" may represent three cases: A exists alone, both A and B exist, and B exists alone. In addition, a character "/" herein generally indicates that the associated objects before and after this character are in an "or" relationship.

Terms used in the section of detailed description are used only for explanation of specific embodiments of the present disclosure and are not intended to limit the present disclosure. The terms "first", "second", "third", "fourth" or the like in the specification and claims of the present disclosure and the drawings are used to distinguish different objects and are not used to describe a specified sequence. Furthermore, the terms "include" and "have" and any variations thereof are intended to cover non-exclusive inclusion.

It should be understood that, "indicate" mentioned in the embodiments of the present disclosure may mean a direct indication or an indirect indication, or represent that there is an association relationship. For example, A indicates B, which may mean that A directly indicates B, for example, B may be obtained through A; or it may mean that A indirectly indicates B, for example, A indicates C, and B may be obtained through C; or it may mean that there is an association relationship between A and B.

In the description of the embodiments of the present disclosure, the term "correspond" may mean that there is a direct correspondence or indirect correspondence between the two, or it may mean that there is an associated relationship between the two, or it may mean a relationship of indicating and being indicated, or configuring and being configured, or the like.

In the embodiments of the present disclosure, "predefined" or "preconfigured" may be achieved by pre-storing corresponding codes, forms or other means used for indicating relevant information in devices (e.g., including a terminal device and network device), and the present disclosure is not limited to the specific implementation thereof. For example, predefined may refer to what is defined in a protocol.

In the embodiments of the present application, the term "protocol" may refer to a standard protocol in the field of communications, for example, the "protocol" may include an LTE protocol, an NR protocol, or related protocols applied in future communication systems, which will not be limited in the present application.

To facilitate understanding of the technical solutions of the embodiments of the present application, the technical solutions of the present application are described in detail below through specific embodiments. The above related arts, as optional solutions, may be arbitrarily combined with the technical solutions in the embodiments of the present application, and those combined solutions all fall within the protection scope of the embodiments of the present application. The embodiments of the present application include at least part of the following contents.

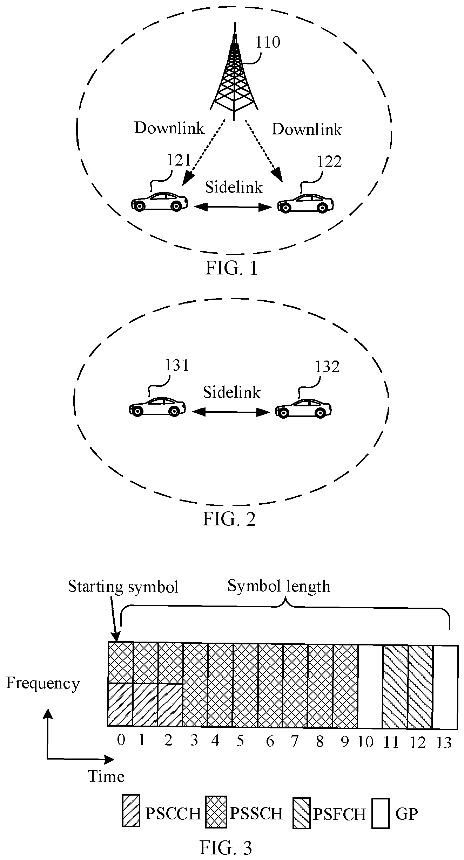

FIG. 1 is a schematic diagram of a communication system applicable to the embodiments of the present application. Transmission resources of vehicle terminals (a vehicle terminal 121 and a vehicle terminal 122) are allocated by a base station 110, and the vehicle terminals perform data transmission on a sidelink according to resources allocated by the base station 110. Specifically, the base station 110 may allocate a resource for single transmission to a terminal, or may allocate a resource for semi-static transmission to the terminal.

FIG. 2 is a schematic diagram of another communication system applicable to the embodiments of the present application. Vehicle terminals (a vehicle terminal 131 and a vehicle terminal 132) independently select transmission resources on the resources of the sidelink to perform data transmission. Optionally, the vehicle terminals may randomly select the transmission resources, or select the transmission resources by means of listening.

Unlicensed spectrum (also be referred to as shared spectrum or non-authorization spectrum) is the spectrum available for communications of radio devices allocated by countries and regions, and the spectrum is generally regarded as the shared spectrum, that is, the spectrum may be used as long as communication devices in different communication systems meet regulatory requirements set by the countries and regions on the spectrum, and there is no need to apply for a proprietary spectrum license from the government.

In an NR-V2X system, a physical sidelink shared channel (PSSCH) and its associated physical sidelink control channel (PSCCH) are transmitted in a same slot, and the PSCCH occupies two or three orthogonal frequency-division multiplexing (OFDM) symbols. Time domain resource allocation of NR-V2X takes a slot as allocation granularity. A starting point and length of OFDM symbols used for sidelink transmission within a slot are configured by parameters, that is, sidelink start symbol (sl-startSLsymbols) and sidelink symbol length (sl-lengthSLsymbols). The last OFDM symbol in those OFDM symbols is used as a guard period (GP), and the PSSCH and PSCCH can only use remaining OFDM symbols. However, if a transmission resource of a physical sidelink feedback channel (PSFCH) is configured within the slot, the PSSCH and the PSCCH cannot occupy OFDM symbols used for PSFCH transmission, auto gain control (AGC) as well as GP symbols before the OFDM symbols.

As illustrated in FIG. 3, a network configures that parameter sl-StartSymbol equals 3 (i.e., sl-StartSymbol=3) and parameter sl-LengthSymbols equals 11 (i.e., sl-LengthSymbols=11), that is, 11 OFDM symbols starting form symbol index 3 (i.e., symbols 3 to 13) within a slot may be used for sidelink transmission, and there are PSFCH transmission resources within the slot. The PSFCH occupies OFDM symbols 11 and 12, in which OFDM symbol 11 is used as an AGC symbol of the PSFCH, OFDM symbols 10 and 13 are used as GPs, respectively, and OFDM symbols available for PSSCH transmission are symbols 3 to 9. The PSCCH occupies 3 OFDM symbols, that is, symbols 3, 4, and 5, and symbol 3 is usually used as an AGC symbol.

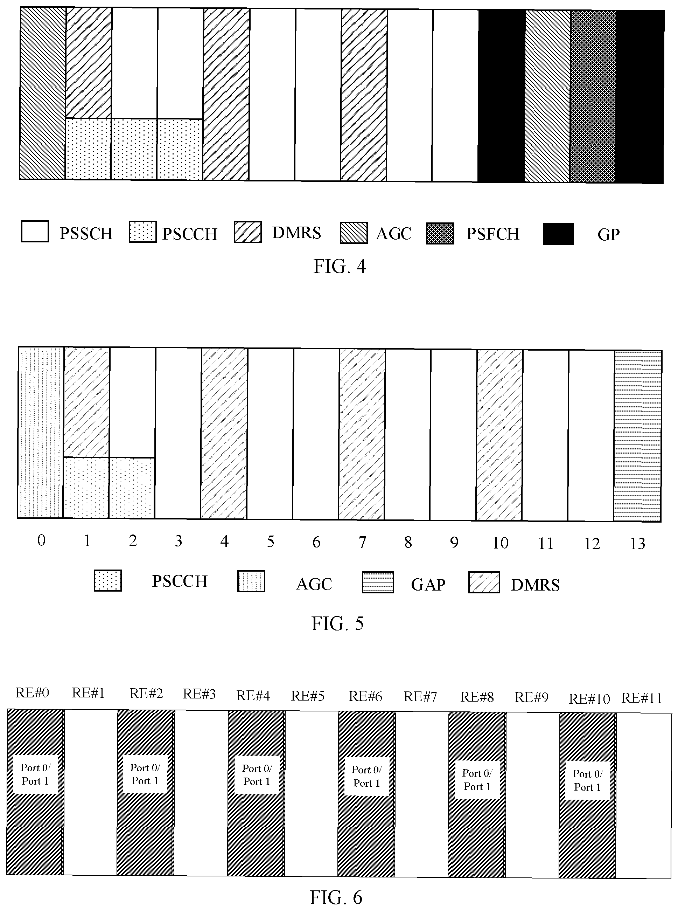

In addition to the PSCCH and PSSCH, the PSFCH may also exist within a sidelink slot in NR-V2X, as illustrated in FIG. 4. It may be seen that within a slot, a first OFDM symbol is fixed for AGC, and on the AGC symbol, the UE copies information transmitted on a second OFDM symbol. One symbol is left at the end of the slot for transceiving conversion, which is used for the UE to convert from a transmitting (or receiving) state to a receiving (or transmitting) state. In remaining OFDM symbols, the PSCCH may occupy two or three OFDM symbols starting from the second OFDM symbol, and in the frequency domain, a number of physical resource blocks (PRBs) occupied by the PSCCH is within a subband range of one PSSCH. If the number of PRBs occupied by the PSCCH is less than a size of one subchannel of the PSSCH, or frequency domain resources of the PSSCH include multiple subchannels, the PSCCH may be frequency-division multiplexed with the PSSCH on OFDM symbols where the PSCCH is located.

Demodulation reference signals (DMRSs) of the PSSCH in NR-V2X draws lessons from design of terminal and network communication (User-Equipment UTRAN, Uu) interface of the NR system, and adopts multiple time domain PSSCH DMRS patterns. Within one resource pool, the number of available DMRS patterns is related to the number of PSSCH symbols within the resource pool. For a specific number of PSSCH symbols (including a first AGC symbol) and the number of PSCCH symbols, available DMRS patterns and a position of each DMRS symbol within the DMPR pattern are illustrated in Table 1. FIG. 5 illustrates a schematic diagram of time domain positions of 4 DMRS symbols when the PSSCH occupies 13 symbols.

Table 1

| Number of PSSCH symbols (including first AGC symbol) | Position of DMRS symbol (relative to position of first AGC symbol) | | | | | |
|---|---|---|---|---|---|---|
| | Number of PSCCH symbols is 2 | | | Number of PSCCH symbols is 3 | | |
| | Number of DMRS symbols | | | Number of DMRS symbols | | |
| | 2 | 3 | 4 | 2 | 3 | 4 |
| 6 | 1, 5 | | | 1, 5 | | |
| 7 | 1, 5 | | | 1, 5 | | |
| 8 | 1, 5 | | | 1, 5 | | |
| 9 | 3, 8 | 1,4,7 | | 4, 8 | 1,4,7 | |
| 10 | 3, 8 | 1,4,7 | | 4, 8 | 1,4,7 | |
| 11 | 3, 10 | 1, 5, 9 | 1, 4, 7, 10 | 4, 10 | 1, 5, 9 | 1, 4, 7, 10 |
| 12 | 3, 10 | 1, 5, 9 | 1, 4, 7, 10 | 4, 10 | 1, 5, 9 | 1, 4, 7, 10 |
| 3 | 3, 10 | 1, 6, 11 | 1, 4, 7, 10 | 4, 10 | 1, 6, 11 | 1, 4, 7, 10 |

If multiple time domain DMRS patterns are configured within the resource pool, a specific time domain DMRS pattern to be adopted may be selected by a transmitting UE and indicated in first-stage sidelink control information (SCI). Such a design allows a UE with high-speed motion to select a high-density DMRS pattern, so as to ensure accuracy of channel estimation; while for a UE with low-speed motion, a low-density DMRS pattern may be adopted, so as to improve spectral efficiency.

A generation manner of a PSSCH DMRS sequence is almost identical to that of a PSCCH DMRS sequence. The only difference is that, in an initialization formula $c_{init}$ of the pseudo-random sequence c(m), $N_{ID} = \sum_{i=0}^{L-1} p_i \cdot 2^{L-1-i}$, in which $p_i$ is an i-th cyclic redundancy check (CRC) of the PSCCH that schedules the PSSCH, and L equals 24 (i.e., $L=24$) and is a number of bits of a PSCCH CRC.

In the NR system, a physical downlink shared channel (PDSCH) and a physical uplink shared channel (PUSCH) support two types of frequency domain DMRS patterns, that is, DMRS frequency domain type 1 and DMRS frequency domain type 2. For each frequency domain type, there are two different types: single DMRS symbol and dual DMRS symbols. Single symbol DMRS frequency domain type 1 supports 4 DMRS ports, and single symbol DMRS frequency domain type 2 may support 6 DMRS ports. In a case of dual DMRS symbols, the number of supported ports is doubled. However, in NR-V2X, since the PSSCH only needs to support two DMRS ports at most, only the single symbol DMRS frequency domain type 1 is supported, as illustrated in FIG. 6.

Similar to LTE-V2X, frequency domain resources of an resource pool in NR-V2X are also continuous, and allocation granularity of the frequency domain resources is also subchannel. The number of PRBs included in one subchannel is {10, 12, 15, 20, 50, 75, 100}, in which a size of the smallest subchannel is 10PRB, which is much larger than a size of the smallest subchannel 4PRB in LTE-V2X. This is principally because the frequency domain resources of the PSCCH in NR-V2X are located within a first subchannel of its associated PSSCH, the frequency domain resources of the PSCCH are less than or equal to a size of one subchannel of the PSSCH, while time domain resources of the PSCCH occupy 2 or 3 OFDM symbols. As such, if the size of the subchannel is configured to be relatively small, there will be few available resources for the PSCCH, the code rate will be increased, and detection performance of the PSCCH will be reduced. In NR-V2X, the size of the subchannel of the PSSCH and the size of frequency domain resource of the PSCCH are configured independently, but it is necessary to ensure that the size of the frequency domain resources of the PSCCH are less than or equal to the size of the subchannel of the PSSCH. The following configuration parameters in NR-V2X resource pool configuration information are used for determining the frequency domain resources of the resource pools of the PSCCH and PSSCH:

subchannel size (sl-SubchannelSize): indicating the number of consecutive PRBs included in one subchannel in a resource pool, where a value range is {10, 12, 15, 20, 50, 75, 100} PRBs;
number of subchannels (sl-NumSubchannel): indicating the number of subchannels included in the resource pool;
subchannel start RB index (sl-StartRB-Subchannel): indicating a start PRB index of a first subchannel in the resource pool;
number of PRBs (sl-RB-Number): indicating the number of consecutive PRBs included in the resource pool; and
PSCCH frequency domain resource indication (sl-FreqResourcePSCCH): indicating a size of the frequency domain resource of the PSCCH, where a value range is {10, 12, 15, 20, 25} PRBs.

When the UE determines a resource pool for PSSCH transmission or PSSCH reception, frequency domain resources included in the resource pool are sl-NumSubchannel consecutive subchannels starting from a PRB indicated by sl-StartRB-Subchannel. If the number of PRBs included in final sl-NumSubchannel consecutive subchannels is less than the number of PRBs indicated by sl-RB-Number, remaining PRBs cannot be used for PSSCH transmission or PSSCH reception.

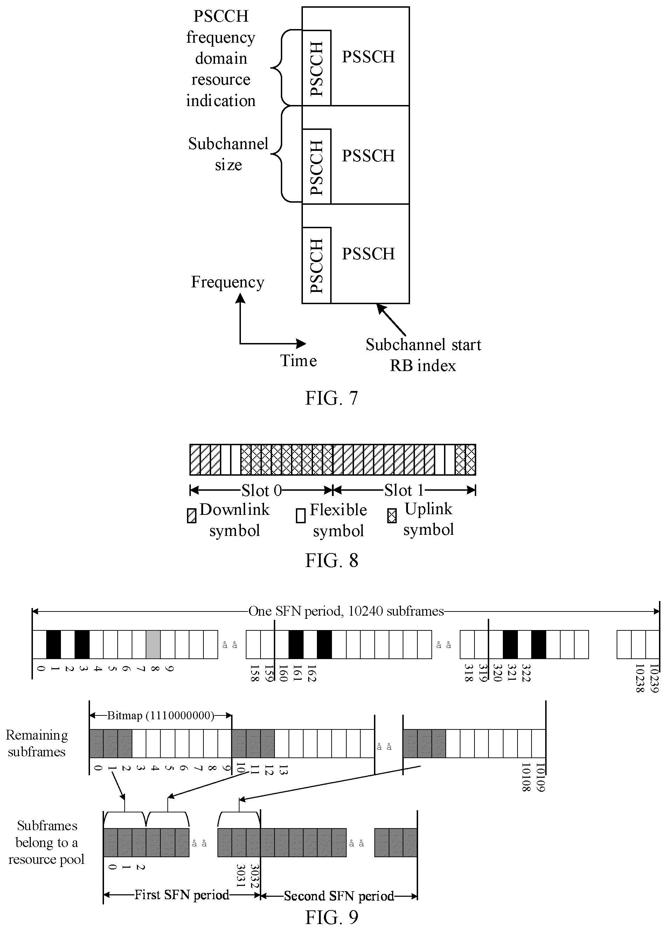

In NR-V2X, a frequency domain starting position of the first subchannel of the PSCCH is aligned with that of the first subchannel of its associated PSSCH. Therefore, a starting position of each PSSCH subchannel is a possible frequency domain starting position of the PSCCH. The frequency domain range of the resource pools of the PSCCH and PSSCH may be determined according to the above parameters, as illustrated in FIG. 7.

In NR-V2X, the PSCCH is used to carry sidelink control information related to resource listening and includes, such as:

a priority of scheduled transmission;
frequency domain resource allocation information, indicating the number of frequency domain resources of the PSSCH within a current slot scheduled by the PSCCH, and the number of frequency domain resources and starting positions of at most two reserved retransmission resources;
time domain resource allocation information, indicating time domain positions of at most two retransmission resources;

a reference signal pattern of the PSSCH;

a second-stage SCI format;

a second-stage SCI rate offset;

a number of PSSCH DMRS ports;

a modulation and coding scheme (MCS);

a MCS form indication;

a number of PSFCH symbols;

a resource reservation period, reserving resources used for another TB to transmit in a next period, where when resource reservation of inter-TB is not activated in resource pool configuration, the information bit field does not exist; and

reserved bits: 2 to 4 bits, where specific number of bits is configured by a network or preconfigured.

Since the PSCCH is always transmitted within a same time slot with the scheduled PSSCH, and a starting position of the PRB occupied by the PSCCH is a starting position of a first subchannel of the scheduled PSSCH. SCI format 1-A does not explicitly indicate a time-frequency domain starting position of the scheduled PSSCH.

In NR-V2X, transmission of the PSCCH/PSSCH is based on slot-level, that is, only one PSCCH/PSSCH may be transmitted within one slot, and transmission of multiple PSCCHs/PSSCHs within one slot through time-division multiplexing (TDM) is not supported. PSCCHs/PSSCHs between different users may be multiplexed within one slot through frequency-division multiplexing (FDM). The time domain resources of the PSSCH in NR-V2X takes a slot as granularity, however, unlike the PSSCHs in LTE-V2X that occupy all time domain symbols in one subframe, the PSSCHs in NR-V2X may occupy part of symbols in one slot. This is principally because, in the LTE system, uplink transmission or downlink transmission is also based on subframe granularity, the sidelink transmission also takes a subframe as granularity (special subframes in a TDD system are not used for sidelink transmission). In the NR system, a flexible slot structure is adopted, that is, a slot includes both uplink (UL) symbols and downlink (DL) symbols, which may achieve more flexible scheduling and reduce latency. FIG. 8 illustrates a typical subframe of the NR system, in which a slot includes DL symbols, UL symbols and flexible symbols, the downlink symbols are located at the starting position of the slots, the uplink symbols are located at the ending position of the slots, and the flexible symbols are located between the DL symbol and UL symbol. The number of various symbols within each slot is configurable.

A sidelink transmission system may share carriers with a cellular system, and in this case, the sidelink transmission can only use uplink transmission resources of the cellular system. For NR-V2X, if sidelink transmission is still required to occupy all time domain symbols within one slot, the network needs to configure a slot with full uplink symbols for sidelink transmission, which will have a great impact on uplink and downlink data transmission of the NR system, so that the performance of the system is reduced. Therefore, in NR-V2X, part of the time domain symbols within a slot are supported for sidelink transmission, that is, part of the uplink symbols within one slot are used for sidelink transmission. In addition, considering that the AGC symbol and GP symbols are included in sidelink transmission, if the number of uplink symbols available for sidelink transmission is low, remaining symbols available for transmitting valid data are even fewer after the AGC symbol and the GP symbols are removed, ao that the resource utilization rate is very low. Therefore, the number of the time domain symbols occupied by the sidelink transmission in NR-V2X is at least 7 (including GP symbols). When the dedicated carriers are used by the sidelink transmission system, there is no problem of sharing transmission resources with other systems in this case, and all symbols within the slot may be configured to be used for sidelink transmission.

In the NR-V2X system, the time domain resources of the resource pool are also indicated by a bitmap. Considering the flexible slot structure in the NR system, a length of the bitmap is also extended, and a supported bitmap length range is [10:160]. A manner of determining a slot position belonging to the resource pool within a system frame number (SFN) period by using the bitmap is the same as that in LTE-V2X, however, there are the following two differences.

1. A total number of slots included in one SFN period is $10240 \times 2^{\mu}$, where the parameter $\mu$ is related to a size of a subcarrier spacing.

2. If at least one of the time domain symbols Y, Y + 1, Y + 2, ..., Y + X - 1 included within one slot is not configured as an uplink symbol by TDD-UL-DL-ConfigCommon signaling of the network, the slot cannot be used for sidelink transmission, where Y and X represent sl-StartSymbol and sl-LengthSymbols, respectively.

Specifically, the following steps are included.

Step 1: within the SFN period, slots that do not belong to the resource pool, including synchronization slots and slots that cannot be used for sidelink transmission, are removed. Remaining slots are represented as a remaining slot set, and the remaining slots are renumbered as $(l_0, l_1, \cdots, l_{(10240 \times 2^{\mu} - N_{S\_SSB} - N_{nonSL} - 1)})$.

Where $N_{S\_SSB}$ represents the number of synchronization slots within one SFN period; the synchronization slots are determined according to synchronization-related configuration parameters (refer to Section 5.4), which is related to a period of SSB transmission and the number of SSB transmission resources configured within the period.

Where $N_{nonSL}$ represents the number of slots within one SFN period that do not comply with configurations of starting points and number of uplink symbols: if at least one of the time domain symbols Y, Y + 1, Y + 2, ..., Y + X - 1 included within one slot is not semi-statically configured as an uplink symbol, the slot cannot be used for sidelink transmission, where Y and X represent sl-StartSymbol and sl-LengthSymbols, respectively.

Step 2: a number of reserved slots and corresponding time domain positions are determined.

If the number of slots in the remaining slot set cannot be divisible by the length of the bitmap, the number of reserved slots and the corresponding time domain positions need to be determined. Specifically, if a slot $l_r$ ($0 \le r < 10240 \times 2^{\mu}$ - $N_{SSSB}$ - $N_{nonSL}$) meets following conditions, the slot is a reserved slot:

$$ r = \left\lfloor \frac{m \cdot (10240 \times 2^{\mu} - N_{S\_SSB} - N_{nonSL})}{N_{reserved}} \right\rfloor $$

Where $N_{reserved}$ = (10240 $\times$ $2^{\mu}$ - $N_{S\_SSB}$ - $N_{nonSL}$) mod $L_{bitmap}$ represents the number of reserved slots, $L_{bitmap}$ represents the length of the bitmap, and m = 0,...,$N_{reserved}$ - 1.

Step 3: the reserved slots are removed from the remaining slot set, and a set of the remaining slots is represented as a logical slot set. Slots in the logical slot set are all slots available for the resource pool, and the slots in the logical slot set are renumbered as $\left( t_0^{SL}, t_1^{SL}, \ldots, t_{T_{max}-1}^{SL} \right)$, where $T_{max}$ = 10240 $\times$ $2^{\mu}$ - $N_{S\_SSB}$ - $N_{nonSL}$ - $N_{reserved}$.

Step 4: slots belonging to the resource pool in the logical slot set are determined according to a bitmap.

The bitmap in the resource pool configuration information is ($b_0$, $b_1$,...,$b_{L_{bitmap}-1}$), for the slot in the logical slot set $t_k^{SL}$ ($0 \le k < (10240 \times 2^{\mu}$ - $N_{S\_SSB}$ - $N_{nonSL}$ - $N_{reserved}$)), in a case where the equation $b_{k'}$ = 1 is met, the slot is a slot belonging to the resource pool, where k' = k mod $L_{bitmap}$.

Step 5: the slots belonging to the resource pool determined in step 4 are renumbered in sequence as $t_i'^{SL}$, i $\in$ {0, 1, ..., T'$_{max}$ - 1}, where T'$_{max}$ represents the number of slots included in the resource pool.

As illustrated in FIG. 9, one SFN period (or DFN period) includes 10240 subframes, a period of a synchronization signal is 160 ms, and two synchronization subframes are included in one synchronization period. Therefore, there are 128 synchronization subframes within one SFN period and the length of the bitmap used for indicating the time domain resources of the resource pool is 10 bits. Therefore, two reserved subframes are required, and the number of remaining subframes is that 10240 minus 128 minus 2 equals 10110 (i.e., 10240-128-2=10110), which may be divisible by the length 10 of the bitmap. The remaining subframes are renumbered as 0, 1, 2,..., 10109, the first 3 bits of the bitmap are 1, and the remaining 7 bits are 0, that is, in the remaining subframes, the first 3 subframes in every 10 subframes belong to the resource pool, and the remaining subframes do not belong to the resource pool. Since the bitmap needs to be repeated 1011 times in the remaining subframes, to indicate whether all subframes belong to the resource pool. Each bitmap period includes 3 subframes, therefore, a total of 3033 subframes belong to the resource pool in one SFN period.

Two transmission modes are defined in 3GPP, which are respectively referred to as a first mode (sidelink resource allocation mode 1) and a second mode (sidelink resource allocation mode 2).

First mode: a transmission resource of a terminal is allocated by a base station, and the terminal performs data transmission on a sidelink based on the resource allocated by the base station. The base station may allocate a resource for single transmission to the terminal, and may also allocate a resource for semi-static transmission to the terminal. As illustrated in FIG. 3, the terminals are located within the coverage range of the network, and the network allocates transmission resources for the terminals to be used for sidelink transmission.

Second mode: the terminal selects a resource from a resource pool for data transmission. As illustrated in FIG. 5, the terminals are located outside a coverage range of a cell, and the terminals independently select transmission resources in a preconfigured resource pool for sidelink transmission. Alternatively, as illustrated in FIG. 3, the terminals independently select transmission resources in a resource pool configured by the network for sidelink transmission.

In NR-V2X, resource selection in the second mode is supported, that is, the UE excludes resources reserved by other UEs based on detected PSCCHs transmitted by other UEs, and selects resources for data transmission among the remaining resources.

Resource selection in the second mode is performed according to following two steps.

Step 1: the UE takes all available resources within a resource selection window as resource set A.

If the UE transmits data on certain slots within a listening window and does not perform listening, all resources on slots, corresponding to these slots, within the selection window are excluded. The UE determines corresponding slots within the selection window by using a set of values of a "resource reservation period" field in the resource pool configuration used.

If the UE listened to a PSCCH within the listening window, the UE measures a reference signal received power (RSRP) of the PSCCH or an RSRP of a PSSCH scheduled by the PSCCH. If a measured RSRP is greater than an SL-RSRP threshold and it is determined that reserved resources are within the resource selection window based on resource reservation information in sidelink control information transmitted on the PSCCH, corresponding resources are excluded from resource set A. If remaining resources in resource set A are less than X% of all resources in resource set A which before resource exclusion, the SL-RSRP threshold is raised by 3dB, and step 1 is re-performed. Possible values of X are {20, 35, 50}, and the UE determines the parameter X from the set of values according to a priority of data to be transmitted. Further, the above SL-RSRP threshold is related to a priority carried on the PSCCH listened by the UE and the priority of the data to be transmitted by the UE. The UE takes the remaining resources in resource set A after resource exclusion as a candidate resource set.

Step 2: the UE randomly selects several resources from the candidate resource set as transmission resources for its initial transmission and retransmission.

In some scenarios, research and development of sidelink positioning solutions is considered to support use cases, scenarios and requirements determined in these activities. In order to improve the positioning accuracy, especially to achieve positioning of UEs located outside coverage of the cellular network, positioning based on a sidelink positioning reference signal is introduced. The SL PRS may be transmitted within a dedicated resource pool. However, in order to support sidelink positioning and sidelink communication, the UE also needs to transmit and receive UE mutual discovery information, configuration information and measurement reporting information related to sidelink positioning, control and data information related to sidelink communication, or the like, where these information needs to be carried through sidelink channels, such as the PSCCH and/or PSSCH.

When sidelink transmission is performed over an unlicensed spectrum (Sidelink Over Unlicensed Spectrum, SL-U), sidelink transmission needs to meet specific regulatory requirements, including requirements of minimum occupied channel bandwidth (OCB) and maximum power spectral density (PSD). For the requirements of the OCB, when the UE uses the channel to perform data transmission, the occupied channel bandwidth shall not be less than 80% of one channel bandwidth; and for the requirements of the maximum power spectral density, power of the UE performing transmission over per 1MHz shall not exceed 10dBm. In order to meet the regulatory requirements of OCB and PSD, sidelink transmission over the unlicensed spectrum is required to adopt an interlaced resource block (IRB) structure. One IRB includes N RBs discretized in frequency domain, a total of M IRBs are included in a frequency band range; and RBs included in the m-th IRB are {m, M+m, 2M+m, 3M+m,......}.

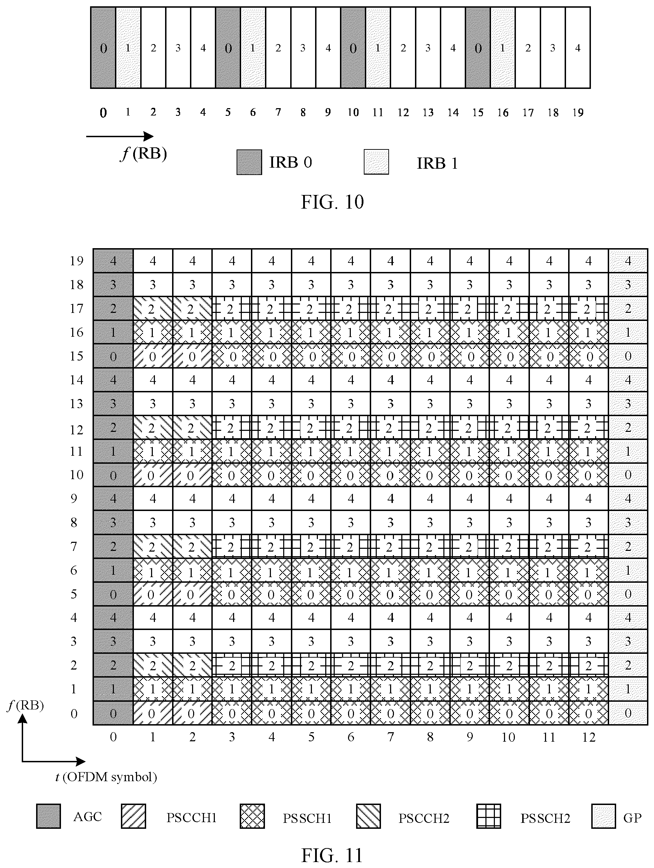

As illustrated in FIG. 10, the system bandwidth includes 20 RBs, including 5 IRBs (i.e., M is equal to 5), each IRB includes 4 RBs (i.e., N is equal to 4), and a frequency domain spacing of two adjacent RBs belonging to the same IRB is the same, that is, 5 RBs apart. Numbers in boxes of the figure represent IRB indexes.

In an SL-U system, if IRB-based resource allocation granularity is adopted, the channels such as PSCCH and PSSCH of the SL-U system should be based on the IRB structure. In this case, a frame structure of the SL-U system is illustrated in FIG. 11, where numbers in boxes represent IRB indexes. FIG. 11 is a schematic diagram of a frame structure in which only PSCCHs and PSSCHs are included within the slot, and a PSFCH does not included within the slot. The bandwidth illustrated in FIG. 11 includes 20 RBs, and 5 IRB resources are configured (that is, M is equal to 5), each IRB resource includes 4 RBs, and numbers in boxes represent IRB indexes. In FIG. 11, the system configures that the PSCCH occupies 1 IRB resource, and occupies 2 OFDM symbols in the time domain. PSSCH takes an IRB as granularity, a first symbol within the slot is the AGC symbol, and a last symbol is the GP symbol. In FIG. 11, PSSCH1 occupies IRB#0 and IRB#1, and its corresponding PSCCH1 occupies IRB#0. PSSCH2 occupies IRB#2, and its corresponding PSCCH2 also occupies IRB#2. It should be noted that, for the sake of simplicity, resources occupied by the second-stage SCI and resources occupied by the PSCCH DMRS and the PSSCH DMRS are not illustrated in FIG. 11.

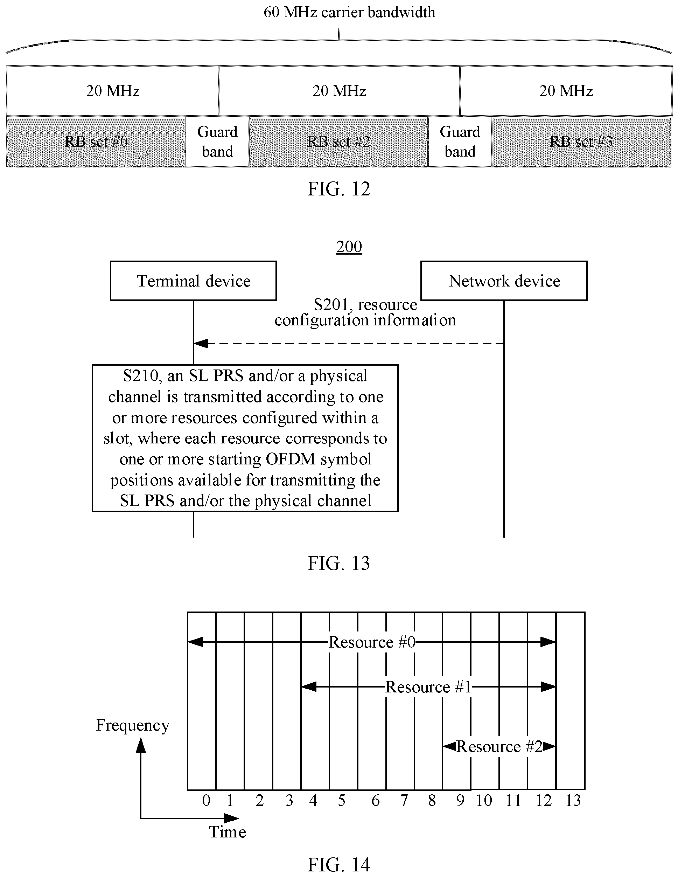

On the unlicensed spectrum, the UE accesses the channel through listen before Talk (LBT), and LBT takes a 20 MHz as granularity in the frequency domain. Every 20 MHz is referred as an RB set, one carrier may include multiple RB sets, and there are guard period between the RB sets, as illustrated in FIG. 12.

On the unlicensed spectrum, the UE needs to perform LBT first, and may access the channel only after the LBT passes. However, the time for the UE to complete LBT is uncertain. that is, if the UE fails to complete LBT before the SL PRS resource, a transmission opportunity may be missed. Therefore, how to perform SL PRS transmission or SL PRS scheduling is an urgent problem to be solved.

FIG. 13 is a schematic interaction diagram of a wireless communication method 200 according to the embodiments of the present application. As illustrated in FIG. 13, the method 200 includes at least part of the following contents.

S210, a terminal device transmits a sidelink positioning reference signal (SL PRS) and/or a physical channel according to one or more resources configured within a slot, the physical channel being used for indicating transmission of the SL PRS, where each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

Therefore, in the embodiments of the present application, there may be multiple starting OFDM symbol positions available for transmitting the SL PRS and/or the physical channel within one slot (i.e., multiple allowed starting OFDM symbol positions available for transmitting the SL PRS and/or the physical channel). In this case, the terminal device may initiate transmission of the SL PRS and/or the physical channel at the nearest starting OFDM symbol position after successful LBT, which is beneficial to improving probability of transmitting the SL PRS on the unlicensed spectrum, so as to improving the positioning accuracy.

In some embodiments, the physical channel may include a PSCCH and/or a PSSCH.

In some embodiments, one resource may include one SL PRS resource or one physical channel resource, the SL PRS resource may be used for transmitting the SL PRS, and the physical channel resource may be used for transmitting the physical channel.

In some other embodiments, multiple resources may include multiple SL PRS resources or multiple physical channel resources, the SL PRS resources may be used for transmitting the SL PRS, and the physical channel resources may be used for transmitting the physical channel.

In some embodiments, the one or more resources may be preconfigured, or defined by a standard, or configured by a network device. For example, the method 200 further includes following.

S201, the terminal device receives resource configuration information transmitted by the network device, where the resource configuration information is used for configuring the one or more resources.

Configuration manners of the one or more resources will be described below in conjunction with specific embodiments.

Embodiment 1: multiple resources are preconfigured or configured within a slot, and each resource corresponds to (or is configured with) one starting OFDM symbol position available for transmitting an SL PRS and/or a physical channel.

In some embodiments, the multiple resources correspond to different starting OFDM symbol positions available for transmitting the SL PRS and/or the physical channel. That is, there are multiple starting OFDM symbol positions available for transmitting the SL PRS and/or the physical channel within one slot, in other words, there are multiple starting OFDM symbol positions allowed for transmitting the SL PRS and/or the physical channel within one slot.

For example, multiple SL PRS resources are preconfigured or configured within a slot, and each SL PRS resource corresponds to one starting OFDM symbol position available for transmitting the SL PRS. The multiple SL PRS resources correspond to different starting OFDM symbol positions available for transmitting the SL PRS. The terminal device may initiate transmission of the SL PRS form the starting OFDM symbol positions available for transmitting the SL PRS corresponding to the multiple SL PRS resources.

As another example, multiple physical channel resources are preconfigured or configured within a slot, and each physical channel resource corresponds to one starting OFDM symbol position available for transmitting the physical channel. The multiple physical channel resources correspond to different starting OFDM symbol positions available for transmitting the physical channel. The terminal device may initiate transmission of the physical channel from the starting OFDM symbol positions available for transmitting the physical channel corresponding to the multiple physical channel resources.

In some embodiments, each of the multiple resources is determined according to corresponding resource configuration information, and starting OFDM symbol positions determined according to resource configuration information corresponding to the multiple resources are different.

For example, the multiple resources are multiple SL PRS resources, and each SL PRS resource is determined according to corresponding SL PRS resource configuration information.

As an example but not a limitation, the resource configuration information is used for configuring, but not limited to, at least one of:

a starting OFDM symbol position of the resource, a number of OFDM symbols included in the resource (i.e., a symbol length), an ending OFDM symbol position of the resource, a bandwidth of the resource, a comb size of the resource, a resource element (RE) offset of the resource, and a sequence identity (ID) of the SL PRS.

In some embodiments, the resource configuration information is preconfigured, or configured by a network device, or predefined by a standard.

It should be understood that a configuration manner of each parameter in the resource configuration information may be the same, or may be different.

For example, some parameters in the resource configuration information are preconfigured, and other parameters are configured by the network device.

As another example, some parameters in the resource configuration information are defined by the standard, and other parameters are configured by the network device.

In some embodiments, the OFDM symbols included in the resources are continuous or discontinuous.

In some embodiments, there is an overlap between the multiple resources in time domain.

For example, the starting OFDM symbol positions of the multiple resources are different, but there is an overlap between the included OFDM symbol positions.

As an example, resources x and y may be configured or preconfigured, where resource x includes OFDM symbols #a to #N and resource y includes OFDM symbols #b to #N, $a<b<N \leq K$, and K being a total number of OFDM symbols within one slot.

In a specific embodiment, as illustrated in FIG. 14, it is assumed that there are 14 OFDM symbols within one slot, that is, OFDM symbols #0 to #13, a last OFDM symbol #13 is used for transceiving conversion, and 3 SL PRS resources with different starting OFDM symbol positions may be configured within the slot. For example, resource #0 starting from OFDM symbol #0 occupies OFDM symbols #0 to #12, resource #1 starting from OFDM symbol #4 occupies OFDM symbols #4 to #12, and resource #2 starting from OFDM symbol #8 occupies OFDM symbols #8 to #12.

In some embodiments, the bandwidth of the resource may be preconfigured, or configured by a network device, or defined by a standard, or defaulted to a bandwidth of a resource pool.

In some embodiments, the comb size of the resource may refer to an interval between two adjacent REs used for transmitting the same SL PRS or the same physical channel. For resources with different starting OFDM symbol positions, comb sizes may be different. For example, in the example of FIG. 14, the comb size of resource #0 may be 12 symbols, the comb size of resource #1 may be 8 symbols, and the comb size of resource #2 may be 4 symbols.

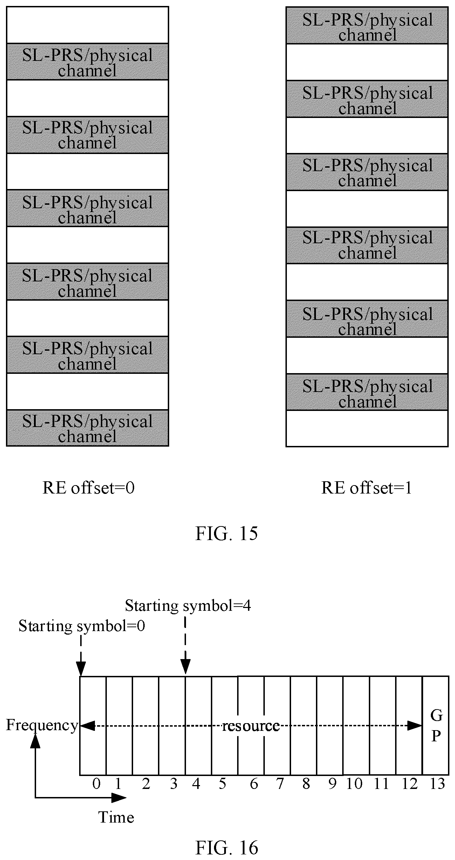

In some embodiments, the RE offset of the resource may refer to an offset of a first RE on a first OFDM symbol used for transmitting the SL PRS or the physical channel relative to a PRB starting point. The RE offset may be configured by a network device, or preconfigured, or may be determined by the terminal device. FIG. 15 is a schematic diagram of resources with a comb size of 2 symbols and RE offsets of 0 and 1, respectively.

In some embodiments, the sequence ID of the SL PRS is used for generating an SL PRS sequence transmitted on the SL PRS resource.

In Embodiment 1, the terminal device may select resources of multiple different starting OFDM symbol positions within the slot when performing resource selection, and when the network device allocates resources to the terminal device, the network device may also allocate resources of multiple different starting OFDM symbol positions within the slot to a same terminal device. After successful LBT, the terminal device may initiates transmission of the SL PRS and/or the physical channel on the resource of the earliest starting OFDM symbol position selected. For example, in the example of FIG. 14, the terminal device may select resource #0, resource #1 and resource #2, and if the terminal device completes LBT before OFDM symbol #3, the terminal device may transmit the SL PRS and/or the physical channel starting from the starting OFDM symbol position of resource #1.

For the receiving terminal, the SL PRS and/or the physical channel transmitted by other terminal devices may be detected only starting from the configured or preconfigured starting OFDM symbol positions, and the physical channel is used for indicating transmission of the SL PRS.

Embodiment 2: one resource is configured or preconfigured within a slot, and the one resource corresponds to (or is configured with) multiple starting OFDM symbol positions available for transmitting the SL PRS and/or the physical channel.

For example, one SL PRS resource is configured or preconfigured within a slot, and the one SL PRS resource corresponds to multiple starting OFDM symbol positions available for transmitting the SL PRS.

As another example, one physical channel resource is configured or preconfigured within a slot, and the physical channel resource corresponds to multiple starting OFDM symbol positions available for transmitting the physical channel.

In some embodiments, other starting OFDM symbol positions among the multiple starting OFDM symbol positions available for transmitting the SL PRS and/or the physical channel, other than the first starting OFDM symbol position available for transmitting the SL PRS and/or the physical channel, are referred as additional starting OFDM symbol positions. That is, in Embodiment 2, there may be one basic starting OFDM symbol position and one or more additional starting OFDM symbol positions within one slot.

In some embodiments, the one resource is determined according to first resource configuration information.

For example, the one resource is one SL PRS resource, and the one SL PRS resource may be determined according to first SL PRS resource configuration information.

As an example but not a limitation, the first resource configuration information is used for configuring, but not limited to, at least one of:

multiple starting OFDM symbol positions of the resource, a number of OFDM symbols included in the resource (i.e., a symbol length), a bandwidth of the resource, a comb size of the resource, an RE offset of the resource, a sequence ID of the SL PRS, or an ending OFDM symbol position of the resource.

In some embodiments, the first resource configuration information is preconfigured, or configured by a network device, or predefined.

It should be understood that a configuration manner of each parameter in the first resource configuration information may be the same, or may be different.

For example, some parameters in the first resource configuration information are preconfigured, and other parameters are configured by the network device.

As another example, some parameters in the first resource configuration information are defined by a standard, and other parameters are configured by the network device.

It should be noted that specific implementations of the number of OFDM symbols included in the resource, the bandwidth of the resource, the RE offset of the resource, the sequence ID of the SL PRS or the like refer to the related description of Embodiment 1, which will not be repeated here for the sake of brevity.

In some embodiments, the number of OFDM symbols included in the resource is counted starting from a first starting OFDM symbol position among the multiple starting OFDM symbol positions.

In some embodiments, the number of OFDM symbols included in the resource may refer to a maximum number of OFDM symbols used for transmitting the SL PRS and/or the physical channel.

In a specific embodiment, as illustrated in FIG. 16, it is assumed that there are 14 OFDM symbols within one slot, that is, OFDM symbols #0 to #13, one resource includes OFDM symbols #0 to #12 within the slot, and allowed starting OFDM symbol positions include OFDM symbol #0 and #4. The terminal device using the resource may initiate transmission of the SL PRS and/or the physical channel at a nearest starting OFDM symbol position after successful LBT.

Determining manners of the comb size of the resource are described below.

Manner 1: the comb size of the resource is preconfigured, or configured by the network device.

Manner 2: the comb size of the resource is determined according to a number of OFDM symbols $N_{min}$ between a last starting OFDM symbol position among the multiple starting OFDM symbol positions and a last OFDM symbol (i.e., the ending OFDM symbol position) of the resource.

Optionally, the last OFDM symbol of the resource may be configured or preconfigured, for example, the resource configuration information may be used to configure the starting OFDM symbol position and the ending OFDM symbol position of the resource.

For example, the comb size of the resource is equal to $N_{min}$ minus 1 (i.e., $N_{min}$-1). Since the first OFDM symbol within the slot is used for AGC adjustment, in order to ensure that the SL PRS or the physical channel transmitted within the available OFDM symbols occupies all REs, the comb size may be equal to $N_{min}$ minus 1 (i.e., $N_{min}$-1).

In a specific example, as illustrated in FIG. 16, the number of OFDM symbols between the last allowed starting OFDM symbol #4 and the last OFDM symbol #12 of the resource is 9, and therefore the comb size transmitted on the SL PRS resource should be 8.

In Manner 2, if the terminal device transmits an SL PRS or physical channel before the last starting OFDM symbol, the SL PRS or the physical channel transmitted by the terminal device at the last starting OFDM symbol may be a repetition of the SL PRS or the physical channel transmitted by the terminal device at the first starting OFDM symbol or at an OFDM symbol after the first starting OFDM symbol.

For example, the terminal device transmits an SL PRS on OFDM symbol #i, and OFDM symbol #i is located before the last starting OFDM symbol #s, the SL PRS transmitted by the terminal device on OFDM symbol #i may be the same as the SL PRS transmitted by the terminal device on OFDM symbol #[s+$N_{min}$-mod(s-i, $N_{min}$)+1], where i and s are both indexes of the OFDM symbols within the slot.

The comb size of the resource is determined based on Manner 2, and the terminal device does not need to dynamically adjust transmission sequence and/or encoding of the SL PRS for indicating the physical channel of the SL PRS according to the starting OFDM position of the SL PRS, which is beneficial to reducing implementation complexity of the terminal device.

In Embodiment 2, after successful LBT, the terminal device may initiates transmission of the SL PRS and/or the physical channel at the nearest starting OFDM symbol position, which is beneficial to improving the probability of transmitting the SL PRS and improving the positioning accuracy. For example, in the example of FIG. 16, if the terminal device completes LBT before OFDM symbol #3, the terminal device may transmit the SL PRS and/or the physical channel starting from OFDM symbol #4.

For the receiving terminal, the SL PRS and/or the physical channel transmitted by other terminal devices may be detected only starting from the configured or preconfigured starting OFDM symbol positions, and the physical channel is used for indicating transmission of the SL PRS.

Embodiment 3: one resource is configured or preconfigured within a slot, and the one resource is configured with a latest starting OFDM symbol position used for transmitting the SL PRS and/or the physical channel.

In Embodiment 3, the terminal device may initiate transmission of the SL PRS and/or the physical channel at a first OFDM symbol position after successful LBT. The OFDM symbol position at which the terminal device initiates transmission of the SL PRS and/or the physical channel is no later than the latest starting OFDM symbol position.

In some embodiments, the one resource is determined according to second resource configuration information, where the second resource configuration information includes first indication information, and the first indication information is used for indicating the latest starting OFDM symbol position. For example, the first indication information may be an index of the latest starting OFDM symbol, or an index of a maximum starting OFDM symbol.

In some embodiments, the second resource configuration information is further used for configuring, but not limited to, at least one of:

a number of OFDM symbols included in the resource (i.e., a symbol length), a bandwidth of the resource, a comb size of the resource, an RE offset of the resource, a sequence ID of the SL PRS, or an end OFDM symbol position of the resource.

Specific implementations of the number of OFDM symbols included in the resource, the bandwidth of the resource, the RE offset of the resource, the sequence ID of the SL PRS or the like refer to the related description of the Embodiment 1, which will not be repeated here for the sake of brevity.

In some embodiments, the second resource configuration information may be preconfigured, or configured by the network device, or defined by a standard.

It should be understood that a configuration manner of each parameter in the second resource configuration information may be the same, or may be different.

For example, some parameters in the second resource configuration information are preconfigured, and other parameters are configured by the network device.

As another example, some parameters in the second resource configuration information are defined by a standard, and other parameters are configured by the network device.

Determining manners of the comb size of the resource are described below.

Manner 1: the comb size of the resource is preconfigured, or configured by the network device.

Manner 2: the comb size of the resource is determined according to a number of OFDM symbols $N_{min}$ between the latest starting OFDM symbol position and a last OFDM symbol of the resource. For example, the comb size of the resource is equal to $N_{min}$ minus 1 (i.e., $N_{min}-1$). Specific implementations refer to the related description of Embodiment 2, which will not be repeated here for the sake of brevity.

Manner 3: the comb size of the resource is determined according to a number of OFDM symbols actually used for transmitting the SL PRS and/or the physical channel. Determining the comb size based on Manner 3 is beneficial to selecting a more optimal comb size.

For example, if the number of OFDM symbols actually used for the SL PRS is M, the terminal device may select one size less than or equal to M from multiple candidate comb sizes as the comb size of the resource. Optionally, the multiple candidate comb sizes may include part or all of {1, 2, 4, 6, 8, 12}.

In Embodiment 3, the terminal device may initiates transmission of the SL PRS and/or the physical channel at the first OFDM symbol starting point after successful LBT, where the position of the first OFDM symbol used for transmitting the SL PRS and/or the physical channel should be no later than the latest allowed starting OFDM symbol position.

In conclusion, in the embodiments of the present application, multiple resources are configured or preconfigured within a slot, each of the multiple resources corresponds to one starting OFDM symbol position available for transmitting the SL PRS and/or the physical channel, and the terminal device may initiate transmission of the SL PRS and/or the physical channel at the starting OFDM symbol positions available for transmitting the SL PRS and/or the physical channel corresponding to the multiple resources; alternatively, one resource is configured or preconfigured in within a slot, and the one resource is configured with multiple starting OFDM symbol positions available for transmitting the SL PRS and/or the physical channel, and the terminal device may initiate transmission of the SL PRS and/or the physical channel at the multiple starting OFDM symbol positions available for transmitting the SL PRS and/or the physical channel corresponding to the one resource; alternatively, one resource may be configured or preconfigured in within a slot, and the resource may be configured with the latest starting OFDM symbol position available for transmitting the SL PRS and/or the physical channel, then the terminal device initiates transmission of the SL PRS and/or the physical channel at the first OFDM symbol starting point after successful LBT, which are beneficial to improving the probability of transmitting the SL PRS on unlicensed spectrum and improving the positioning accuracy.

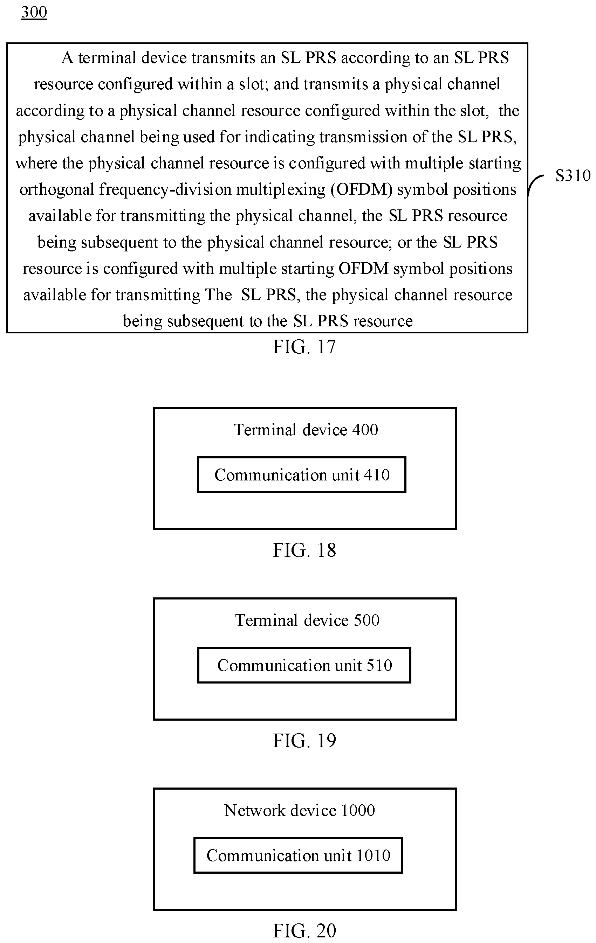

FIG. 17 is a schematic diagram of a wireless communication method 300 according to another embodiment of the present application. As illustrated in FIG. 17, the method 300 includes at least part of the following contents.

S310, a terminal device transmits a sidelink positioning reference signal (SL PRS) according to an SL PRS resource configured within a slot; and transmits a physical channel according to a physical channel resource configured within the slot, where the physical channel is used for indicating transmission of the SL PRS.

In some embodiments, the physical channel may include a PSCCH and/or a PSSCH.

Embodiment 4: the physical channel resource is configured with multiple starting orthogonal frequency-division multiplexing (OFDM) symbol positions available for transmitting the physical channel, the SL PRS resource being subsequent to the physical channel resource.

Optionally, in Embodiment 4, there is an individual OFDM symbol for physical channel transmission at the beginning of one slot, and the physical channel is used for indicating the transmission of the SL PRS.

In a specific embodiment, multiple starting OFDM symbol positions are configured within one slot, and the multiple starting OFDM symbol positions may be used for transmitting the physical channel. For example, if one slot includes 14 OFDM symbols, transmission of the physical channel may be initiated using OFDM symbol #0 and OFDM symbol #3 or #4.

In Embodiment 4, by configuring the physical channel resource having multiple starting OFDM symbol positions, the starting OFDM symbol positions of the SL PRS resource configured within the slot are also different accordingly. For example, if the starting OFDM symbol position of the physical channel is relatively late, the number of OFDM symbols available for transmission of the SL PRS is fewer, that is, the fewer SL PRS resources are configured within the slot, or in other words, the fewer OFDM symbols are occupied by the SL PRS resources.

Embodiment 5: the SL PRS resource is configured with multiple starting OFDM symbol positions available for transmitting the SL PRS, the physical channel resource being subsequent to the SL PRS resource.

Therefore, by configuring the SL PRS resource having multiple starting OFDM symbol positions, the starting OFDM symbol positions of the physical channel resource configured within the slot are also different accordingly.

Optionally, the physical channel resource being subsequent to the SL PRS resource, includes:

the physical channel resources being located within last m OFDM symbols available for sidelink transmission within the slot (i.e., excluding the GP symbol), where m is a positive integer.

In some embodiments, the SL PRS resource is determined according to first SL PRS resource configuration information, where the first SL PRS resource configuration information is used for configuring at least one of:

multiple starting OFDM symbol positions of the SL PRS resource;
a number of OFDM symbols included in the SL PRS resource;
a bandwidth of the SL PRS resource;
a comb size of the SL PRS resource;
an RE offset of the SL PRS resource;
a sequence ID of the SL PRS; or
an ending OFDM symbol position of the SL PRS.

Specific implementations of the starting OFDM symbol positions of the SL PRS resource, the number of OFDM symbols included in the SL PRS resource, the bandwidth of the SL PRS resource, the comb size of the SL PRS resource, the RE offset of the SL PRS resource, the sequence ID of the SL PRS or the like refer to the related description of Embodiment 2 in method 200, which will not be repeated here for the sake of brevity.

In some embodiments, the number of OFDM symbols occupied by the SL PRS resource is counted starting from a first starting OFDM symbol position among the multiple starting OFDM symbol positions.

In some embodiments, the comb size of the SL PRS resource is preconfigured, or configured by a network device.

In some embodiments, the comb size of the SL PRS resource is determined according to the number of OFDM symbols $N_{min}$ between a last starting OFDM symbol position among the multiple starting OFDM symbol positions and a last OFDM symbol of the SL PRS resource.

In some embodiments, the comb size of the SL PRS resource is equal to $N_{min}$ minus 1 (i.e., $N_{min}-1$).

In some embodiments, the first SL PRS resource configuration information is preconfigured, or configured by a network device, or defined by a standard.

In conclusion, in the embodiments of the present application, multiple starting OFDM symbol positions used for transmitting the physical channel are configured or preconfigured within the slot; and for the physical channel transmitted at different starting OFDM symbol positions used for transmitting the physical channel, the starting OFDM symbol positions of the SL PRS resource within the slot are also different accordingly. Therefore, the terminal device may transmit the SL PRS or the physical channel at multiple different starting OFDM symbol positions.

Alternatively, multiple starting OFDM symbol positions used for transmitting the SL PRS are configured or preconfigured within the slot; and for the SL PRS transmitted at different starting OFDM symbol positions used for transmitting the SL PRS, the starting OFDM symbol positions of the physical channel resources within the slot are also different accordingly. Therefore, the terminal device may transmit the SL PRS or the physical channel at multiple different starting OFDM symbol positions.

The method embodiments of the present application are described in detail above in conjunction with FIGS. 13 to 17, and the apparatus embodiments of the present application will be described in detail below in conjunction with FIGS. 18 to 24. It should be understood that the apparatus embodiments and the method embodiments correspond to each other, and similar description of the apparatus embodiments may refer to that of the method embodiments.

FIG. 18 illustrates a schematic block diagram of a terminal device 400 according to the embodiments of the present application. As illustrated in FIG. 18, the terminal device 400 includes:

a communication unit 410, configured to transmit a sidelink positioning reference signal (SL PRS) and/or a physical channel according to one or more resources configured within a slot, the physical channel being used for indicating transmission of the SL PRS, where each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

In some embodiments, multiple resources are configured within the slot, and each resource is configured with one starting OFDM symbol position available for transmitting the SL PRS and/or the physical channel.

In some embodiments, the multiple resources correspond to different starting OFDM symbol positions available for transmitting the SL PRS and/or the physical channel.

In some embodiments, there is an overlap between the multiple resources in time domain.

In some embodiments, each of the multiple resources is determined according to corresponding resource configuration information, and starting OFDM symbol positions determined according to resource configuration information corresponding to the multiple resources are different.

In some embodiments, the resource configuration information is used for configuring at least one of:
a starting OFDM symbol position of the resource, a number of OFDM symbols included in the resource, a bandwidth of the resource, a comb size of the resource, a resource element (RE) offset of the resource, or a sequence identity of the SL PRS.

In some embodiments, the resource configuration information is preconfigured, or configured by a network device, or predefined by a standard.

In some embodiments, one resource is configured within the slot, and the one resource is configured with multiple starting OFDM symbol positions available for transmitting the SL PRS and/or the physical channel.

In some embodiments, the one resource is determined according to first resource configuration information.

In some embodiments, the first resource configuration information is used for configuring at least one of: multiple starting OFDM symbol positions of the resource, a number of OFDM symbols included in the resource, a bandwidth of the resource, a comb size of the resource, an RE offset of the resource, or a sequence identity of the SL PRS.

In some embodiments, the number of OFDM symbols included in the resource is counted starting from a first starting OFDM symbol position among the multiple starting OFDM symbol positions.

In some embodiments, the comb size of the resource is preconfigured, or configured by a network device.

In some embodiments, the comb size of the resource is determined according to a number of OFDM symbols $N_{min}$ between a last starting OFDM symbol position among the multiple starting OFDM symbol positions and a last OFDM symbol of the resource.

In some embodiments, the comb size of the resource is equal to $N_{min}$ minus 1.

In some embodiments, the first resource configuration information is preconfigured, or configured by a network device, or predefined.

In some embodiments, one resource is configured within the slot, and the one resource is configured with a latest starting OFDM symbol position used for transmitting the SL PRS and/or the physical channel.

In some embodiments, an OFDM symbol position at which the terminal device initiates transmission of the SL PRS and/or the physical channel is no later than the latest starting OFDM symbol position.

In some embodiments, the communication unit 410 is further configured to: initiate transmission of the SL PRS and/or the physical channel at a first OFDM symbol position after successful listen before talk (LBT), where the first OFDM symbol position is no later than the latest starting OFDM symbol position.

In some embodiments, the one resource is determined according to second resource configuration information, the second resource configuration information includes first indication information, and the first indication information is used for indicating the latest starting OFDM symbol position.

In some embodiments, the second resource configuration information is further used for configuring at least one of: a number of OFDM symbols included in the resource, a bandwidth of the resource, a comb size of the resource, an RE offset of the resource, or a sequence identity of the SL PRS.

In some embodiments, the comb size of the resource is preconfigured, or configured by a network device.

In some embodiments, the comb size of the resource is determined according to a number of OFDM symbols $N_{min}$ between the latest starting OFDM symbol position and a last OFDM symbol of the resource.

In some embodiments, the comb size of the resource is equal to $N_{min}$ minus 1.

In some embodiments, the comb size of the resource is determined according to a number of OFDM symbols actually used for transmitting the SL PRS and/or the physical channel.

In some embodiments, the second resource configuration information is preconfigured, or configured by a network device, or predefined by a standard.

In some embodiments, the physical channel includes a physical sidelink control channel (PSCCH) and/or a physical sidelink shared channel (PSSCH).

Optionally, in some embodiments, the communication unit may be a communication interface or a transceiver, or an input/output interface of a communication chip or a system on chip. The processing unit mentioned above may be one or more processors.

It should be understood that the terminal device 400 according to the embodiments of the present application may correspond to the terminal device in the method embodiments of the present application, and the above mentioned and other operations and/or functions of each unit in the terminal device 400 are respectively for realizing the corresponding processes of the terminal device in the method 200 illustrated in FIGS. 13 to 16, which will not be repeated here for the sake of brevity.

FIG. 19 illustrates a schematic block diagram of a terminal device 500 according to the embodiments of the present application. As illustrated in FIG. 19, the terminal device 500 includes:

a communication unit 510, configured to transmit a sidelink positioning reference signal (SL PRS) according to an SL PRS resource configured within a slot; and
transmit a physical channel according to a physical channel resource configured within the slot, the physical channel being used for indicating transmission of the SL PRS;
where the physical channel resource is configured with multiple starting orthogonal frequency-division multiplexing (OFDM) symbol positions available for transmitting the physical channel, the SL PRS resource being subsequent to the physical channel resource; or
the SL PRS resource is configured with multiple starting OFDM symbol positions available for transmitting the SL PRS, the physical channel resource being subsequent to the SL PRS resource.

In some embodiments, the physical channel resource being subsequent to the SL PRS resource includes: the physical channel resource being located within last m OFDM symbols available for sidelink transmission within the slot, where m is a positive integer.

In some embodiments, the SL PRS resource is configured with multiple starting OFDM symbol positions available for transmitting the SL PRS, the SL PRS resource is determined according to first SL PRS resource configuration information, and the first SL PRS resource configuration information includes at least one of: multiple starting OFDM symbol positions of the SL PRS resource, a number of OFDM symbols of the SL PRS resource, a bandwidth of the SL PRS resource, a comb size of the SL PRS resource, an RE offset of the SL PRS resource, or a sequence identity of the SL PRS.

In some embodiments, a number of OFDM symbols occupied by the SL PRS resource is counted starting from a first starting OFDM symbol position among the multiple starting OFDM symbol positions.

In some embodiments, the comb size of the SL PRS resource is preconfigured, or configured by a network device.

In some embodiments, the comb size of the SL PRS resource is determined according to a number of OFDM symbols $N_{min}$ between a last starting OFDM symbol position among the multiple starting OFDM symbol positions and a last OFDM symbol of the SL PRS resource.

In some embodiments, the comb size of the SL PRS resource is equal to $N_{min}$ minus 1.

In some embodiments, the first SL PRS resource configuration information is preconfigured, or configured by a network device, or predefined.

In some embodiments, the physical channel includes a physical sidelink control channel (PSCCH) and/or a physical sidelink shared channel (PSSCH).

In some embodiments, the communication unit may be a communication interface or a transceiver, or an input/output interface of a communication chip or a system on chip.

It should be understood that the terminal device 500 according to the embodiments of the present application may correspond to the terminal device in the method embodiments of the present application, and the above mentioned and other operations and/or functions of each unit in the terminal device 500 are respectively for realizing the corresponding processes of the terminal device in the method 300 illustrated in FIG. 17, which will not be repeated here for the sake of brevity.

FIG. 20 is a schematic block diagram of a network device according to the embodiments of the present application. The network device 1000 of FIG. 20 includes:
a communication unit 1010, configure one or more resources within a slot for a terminal device, where the one or more resources are used for the terminal device to transmit a sidelink positioning reference signal (SL PRS) and/or a physical channel by, and the physical channel is used for indicating transmission of the SL PRS; where each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

In some embodiments, multiple resources are configured within the slot, and each resource is configured with one starting OFDM symbol position available for transmitting the SL PRS and/or the physical channel.

In some embodiments, the multiple resources correspond to different starting OFDM symbol positions available for transmitting the SL PRS and/or the physical channel.

In some embodiments, there is an overlap between the multiple resources in time domain.

In some embodiments, each of the multiple resources is configured through corresponding resource configuration information, and starting OFDM symbol positions configured through resource configuration information corresponding to the multiple resources are different.

In some embodiments, the resource configuration information is used for configuring at least one of:
a starting OFDM symbol position of the resource, a number of OFDM symbols included in the resource, a bandwidth of the resource, a comb size of the resource, a resource element (RE) offset of the resource, or a sequence identity of the SL PRS.

In some embodiments, one resource is configured within the slot, and the one resource is configured with multiple starting OFDM symbol positions available for transmitting the SL PRS and/or the physical channel.

In some embodiments, the one resource is configured through first resource configuration information.

In some embodiments, the first resource configuration information is used for configuring at least one of: multiple starting OFDM symbol positions of the resource, a number of OFDM symbols included in the resource, a bandwidth of the resource, a comb size of the resource, an RE offset of the resource, or a sequence identity of the SL PRS.

In some embodiments, the number of OFDM symbols included in the resource is counted starting from a first starting OFDM symbol position among the multiple starting OFDM symbol positions.

In some embodiments, the comb size of the resource is preconfigured, or configured by the network device.

In some embodiments, the comb size of the resource is determined according to a number of OFDM symbols $N_{min}$ between a last starting OFDM symbol position among the multiple starting OFDM symbol positions and a last OFDM symbol of the resource.

In some embodiments, the comb size of the resource is equal to $N_{min}$ minus 1.

In some embodiments, one resource is configured within the slot, and the one resource is configured with a latest starting OFDM symbol position used for transmitting the SL PRS and/or the physical channel.

In some embodiments, an OFDM symbol position at which the terminal device initiates transmission of the SL PRS and/or the physical channel is no later than the latest starting OFDM symbol position.

In some embodiments, the one resource is configured through second resource configuration information, the second resource configuration information includes first indication information, and the first indication information is used for indicating the latest starting OFDM symbol position.

In some embodiments, the second resource configuration information is further used for configuring at least one of: a number of OFDM symbols included in the resource, a bandwidth of the resource, a comb size of the resource, an RE offset of the resource, and a sequence identity of the SL PRS.

In some embodiments, the comb size of the resource is preconfigured, or configured by the network device.

In some embodiments, the comb size of the resource is determined according to a number of OFDM symbols $N_{min}$ between the latest starting OFDM symbol position and a last OFDM symbol of the resource.

In some embodiments, the comb size of the resource is equal to $N_{min}$ minus 1.

In some embodiments, the comb size of the resource is determined according to a number of OFDM symbols actually used for transmitting the SL PRS and/or the physical channel.

In some embodiments, the physical channel includes a physical sidelink control channel (PSCCH) and/or a physical sidelink shared channel (PSSCH).

In some embodiments, the communication unit may be a communication interface or a transceiver, or an input/output interface of a communication chip or a system on chip.

It should be understood that the network device 1000 according to the embodiments of the present application may correspond to the network device in the embodiments of the method of the present application, and the above mentioned and other operations and/or functions of each unit in the network device 1000 are respectively for realizing the corresponding processes of the network device in the method 200 illustrated in FIGS. 13 to 16, which will not be repeated here for the sake of brevity.

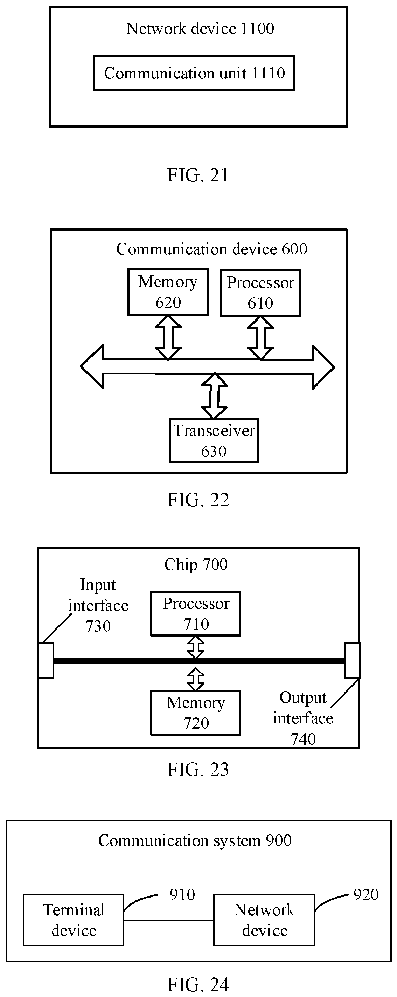

FIG. 21 is a schematic block diagram of a network device according to the embodiments of the present application. The network device 1100 of FIG. 21 includes:

a communication unit 1110, configured to configure a sidelink positioning reference signal (SL PRS) resource and a physical channel resource within a slot for a terminal device, where
the physical channel resource is configured with multiple starting orthogonal frequency-division multiplexing (OFDM) symbol positions available for transmitting a physical channel, the SL PRS resource being subsequent to the physical channel resource; or
the SL PRS resource is configured with multiple starting OFDM symbol positions available for transmitting an SL PRS, the physical channel resource being subsequent to the SL PRS resource.

In some embodiments, the physical channel resource being subsequent to the SL PRS resource includes:
the physical channel resource being located within last m OFDM symbols available for sidelink transmission within the slot, where m is a positive integer.

In some embodiments, the SL PRS resource is configured with multiple starting OFDM symbol positions available for transmitting the SL PRS, the SL PRS resource is configured through first SL PRS resource configuration information, and the first SL PRS resource configuration information is used for configuring at least one of:
multiple starting OFDM symbol positions of the SL PRS resource, a number of OFDM symbols of the SL PRS resource, a bandwidth of the SL PRS resource, a comb size of the SL PRS resource, an RE offset of the SL PRS resource, or a sequence identity of the SL PRS.

In some embodiments, a number of OFDM symbols occupied by the SL PRS resource is counted starting from a first starting OFDM symbol position among the multiple starting OFDM symbol positions.

In some embodiments, the comb size of the SL PRS resource is preconfigured, or configured by the network device.

In some embodiments, the comb size of the SL PRS resource is determined according to a number of OFDM symbols $N_{min}$ between a last starting OFDM symbol position among the multiple starting OFDM symbol positions and a last OFDM symbol of the SL PRS resource.

In some embodiments, the comb size of the SL PRS resource is equal to $N_{min}$ minus 1.

In some embodiments, the first SL PRS resource configuration information is preconfigured, or configured by the network device, or predefined.

In some embodiments, the physical channel includes a physical sidelink control channel (PSCCH) and/or a physical sidelink shared channel (PSSCH).

In some embodiments, the communication unit may be a communication interface or a transceiver, or an input/output interface of a communication chip or a system on chip.

It should be understood that the network device 1100 according to the embodiments of the present application may correspond to the network device in the method embodiments of the present application, and the above and other operations and/or functions of each unit in the network device 1100 are respectively for implementing corresponding processes of the network device in the method 300 illustrated in FIG. 17, which will not be repeated here for the sake of brevity.

FIG. 22 is a schematic structural diagram of a communication device 600 provided in the embodiments of the present application. The communication device 600 illustrated in FIG. 22 includes a processor 610, and the processor 610 may call a computer program from a memory and run the computer program to implement the methods of the embodiments of the present application.

Optionally, as illustrated in FIG. 22, the communication device 600 may further include a memory 620. The processor 610 may call a computer program from the memory 620 and run the computer program, to implement the methods in the embodiments of the present application.

The memory 620 may be a separate device independent from the processor 610, or may be integrated into the processor 610.

Optionally, as illustrated in FIG. 22, the communication device 600 may further include a transceiver 630, and the processor 610 may control the transceiver 630 to communicate with other devices, specifically, may transmit information or data to other devices, or receive information or data transmitted by other devices.

The transceiver 630 may include a transmitter and a receiver. The transceiver 630 may further include an antenna, and the number of the antenna(s) may be one or more.

Optionally, the communication device 600 may specifically be the network device in the embodiments of the present application, and the communication device 600 may implement the corresponding processes implemented by the network device in various methods of the embodiments of the present application, which will not be repeated here for the sake of brevity.

Optionally, the communication device 600 may specifically be the mobile terminal/terminal device of the embodiments of the present application, and the communication device 600 may implement the corresponding processes implemented by the mobile terminal/the terminal device in various methods of the embodiments of the present application, which will not be repeated here for the sake of brevity.

FIG. 23 is a schematic structural diagram of a chip in the embodiments of the present application. The chip 700 illustrated in FIG. 23 includes a processor 710, and the processor 710 may call a computer program from a memory and run the computer program, to implement the methods in the embodiments of the present application.

Optionally, as illustrated in FIG. 23, the chip 700 may further include a memory 720. The processor 710 may call a computer program from the memory 720 and run the computer program, to implement the methods in the embodiments of the present application.

The memory 720 may be a separate device independent from the processor 710, or may be integrated into the processor 710.

Optionally, the chip 700 may further include an input interface 730. The processor 710 may control the input interface 730 to communicate with other devices or chips, and specifically, may obtain information or data transmitted by other devices or chips.

Optionally, the chip 700 may further include an output interface 740. The processor 710 may control the output interface 740 to communicate with other devices or chips, and specifically, may output information or data to other devices or chips.

Optionally, the chip may be applied to the network device in the embodiments of the present application, and the chip may implement the corresponding processes implemented by the network device in various methods of the embodiments of the present application, which will not be repeated here for the sake of brevity.

Optionally, the chip may be applied to the mobile terminal/terminal device in the embodiments of the present application, and the chip may implement the corresponding processes implemented by the mobile terminal/the terminal device in various methods of the embodiments of the present application, which will not be repeated here for the sake of brevity.

It should be understood that the chip mentioned in the embodiments of the present application may also be called a system-level chip, a system chip, a chip system or a system-on-chip chip, or the like.

FIG. 24 is a schematic block diagram of a communication system 900 provided in the embodiments of the present application. As illustrated in FIG. 24, the communication system 900 includes a terminal device 910 and a network device 920.

The terminal device 910 may be configured to implement the corresponding functions implemented by the terminal device in the above methods, and the network device 920 may be configured to implement the corresponding functions implemented by the network device in the above methods, which will not be repeated here for the sake of brevity.

It should be understood that the processor in the embodiments of the present application may be an integrated circuit chip with signal processing capabilities. In the implementation process, each step in the above method embodiments may be completed by an integrated logic circuit of hardware in a processor or instructions in a software form in the processor. The above processor may be a general purpose processor, a digital signal processor (DSP), an application specific integrated circuit (ASIC), a field programmable gate array (FPGA) or other programmable logic device, a discrete gate, a transistor logic device, or a discrete hardware component, which may implement or perform the disclosed methods, steps and logic block diagrams in the embodiments of the present disclosure. The general purpose processor may be a microprocessor, or the processor may be any conventional processor. The steps of the methods disclosed in conjunction with the embodiments of the present application may be directly implemented as being performed by the hardware decoding processor, or may be implemented by a combination of the hardware and software modules in the decoding processor. The software module may be located in a random memory, a flash memory, a read-only memory, a programmable read-only memory, an electrically erasable programmable memory, a register or other mature storage media in the art. The storage medium is located in the memory, and the processor reads the information in the memory and completes the steps of the above method in combination with its hardware.

It will be understood that the memory in the embodiments of the present application may be a volatile (transitory) memory or a non-volatile (non-transitory) memory, or may include both volatile and non-volatile memories. The non-volatile memory may be a read-only memory (ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (RAM), which is used as an external cache. As an example but not limitation, a variety of forms of RAMs are available, such as a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchronous link dynamic random access memory (Synchlink DRAM, SLDRAM) and a direct memory bus random access memory (Direct Rambus RAM, DR RAM). It should be noted that the memory of the systems and methods described herein is intended to include, but is not limited to, these and any other suitable types of memories.

It should be understood that the above memory is exemplary but not limited illustration. For example, the memory in the embodiments of the present application may be a static random access memory (static RAM, SRAM), a dynamic random access memory (dynamic RAM, DRAM), a synchronous dynamic random access memory (synchronous DRAM, SDRAM)), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), or a direct memory bus random access memory (Direct Rambus RAM, DR RAM). That is, the memory in the embodiments of the present application is intended to include, but not limited to, these and any other suitable types of memories.

The embodiments of the present application further provide a computer-readable storage medium for storing a computer program.

Optionally, the computer-readable storage medium may be applied to the network device in the embodiments of the present application, and the computer program enables the computer to perform the corresponding processes implemented by the network device in the various methods in the embodiments of the present application, which will not be repeated here for the sake of brevity.

Optionally, the computer-readable storage medium may be applied to the mobile terminal/terminal device in the embodiments of the present application, and the computer program causes the computer to perform the corresponding processes implemented by the mobile terminal/terminal device in the various methods in the embodiments of the present application, which will not be repeated here for the sake of brevity.

The embodiments of the present application further provide a computer program product including computer program instructions.

Optionally, the computer program product may be applied to the network device in the embodiments of the present application, and the computer program instructions enable a computer to perform the corresponding processes implemented by the network device in the various methods in the embodiments of the present application, which will not be repeated here for the sake of brevity.

Optionally, the computer program product may be applied to the mobile terminal/terminal device in the embodiments of the present application, and the computer program instructions enable a computer to perform the corresponding processes implemented by the mobile terminal/the terminal device in the various methods in the embodiments of the present application, which will not be repeated here for the sake of brevity.

The embodiments of the present application further provide a computer program.

Optionally, the computer program may be applied to the network device in the embodiments of the present application. The computer program which, when performed on a computer, enables the computer to perform the corresponding processes implemented by the network device in the various methods in the embodiments of the present application, which will not be repeated here for the sake of brevity.

Optionally, the computer program may be applied to the mobile terminal/terminal device in the embodiments of the present application. The computer program which, when performed on a computer, enables the computer to perform the corresponding processes implemented by the mobile terminal/ terminal device in the various methods in the embodiments of the present application, which will not be repeated here for the sake of brevity.

Those of ordinary skill in the art will appreciate that units and algorithm steps of all examples described in conjunction with the embodiments disclosed herein may be implemented by electronic hardware, or by a combination of computer software and electronic hardware. Whether these functions are performed in hardware or software depends on the specific application and design constraints of the technical solutions. A skilled person may use different methods to implement the described functions for each specific application, but such implementation should not be considered beyond the scope of the present application.

It may be clearly understood by those skilled in the art that, for convenience and brevity of the description, the specific operating processes of the system, apparatus/devices and units described above may refer to the corresponding processes in the above method embodiments, which will not be repeated here.

In several embodiments provided in the present application, it should be understood that the disclosed system, apparatus/devices and methods may be implemented in other ways. For example, the apparatus embodiments described above are only schematic. For example, the division of the units is only division of logical functions, and there may be other division ways in the actual implementation, for example, a plurality of units or components may be combined or integrated into another system, or some features may be ignored or not implemented. In addition, the mutual coupling or direct coupling or communication connection between each other as illustrated or discussed may be indirect coupling or communicative connection of apparatus or units via some interfaces, which may be electrical, mechanical, or in other forms.

The units described as separation components may or may not be physically separated, and the components illustrated as units may or may not be physical units, that is, they may be located in one place, or may be distributed onto a plurality of network units. Some or all of the units may be selected according to actual requirements to implement the purpose of the schemes of the embodiments.

In addition, various functional units in the various embodiments of the present application may be integrated into one processing unit, or various units may exist physically separately, or two or more units may be integrated into one unit.

If the functions are implemented in the form of a software functional unit and sold or used as an independent product, they may be stored in a computer readable storage medium. Based on such an understanding, the technical solution of the present application, in essence or a part of the technical solutions that contribute to a prior art or a part of the technical solutions, may be embodied in the form of a software product, and the computer software product is stored in a storage medium and includes several instructions for enabling a computer device (which may be a personal computer, a server, a network device, or the like) to perform all or a part of the steps of the methods described in various embodiments of the present application. The aforementioned storage media includes a USB flash drive (U disk), a mobile hard disk, a read-only memory (ROM), a random access memory (RAM), a disk, an optical disk, and other mediums that may store program codes.

The foregoing descriptions are merely specific implementations of the present application, but the protection scope of the present application is not limited thereto. Any skilled person in the art could readily conceive of changes or replacements within the technical scope of the present application, which shall be all included in the protection scope of the present application. Therefore, the protection scope of the present application shall be subject to the protection scope of claims.

**Claims**

1. A wireless communication method, comprising:
transmitting, by a terminal device, a sidelink positioning reference signal (SL PRS) and/or a physical channel according to one or more resources configured within a slot, the physical channel being used for indicating transmission of the SL PRS, wherein each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

2. The method according to claim 1, wherein multiple resources are configured within the slot, and each resource is configured with one starting OFDM symbol position available for transmitting the SL PRS and/or the physical channel.

3. The method according to claim 2, wherein the multiple resources correspond to different starting OFDM symbol positions available for transmitting the SL PRS and/or the physical channel.

4. The method according to claim 2 or 3, wherein there is an overlap between the multiple resources in time domain.

5. The method according to any one of claims 2 to 4, wherein each of the multiple resources is determined according to corresponding resource configuration information, and starting OFDM symbol positions determined according to resource configuration information corresponding to the multiple resources are different.

6. The method according to claim 5, wherein the resource configuration information is used for configuring at least one of:
a starting OFDM symbol position of the resource, a number of OFDM symbols comprised in the resource, a bandwidth of the resource, a comb size of the resource, a resource element (RE) offset of the resource, or a sequence identity of the SL PRS.

7. The method according to claim 5 or 6, wherein the resource configuration information is preconfigured, or configured by a network device, or predefined by a standard.

8. The method according to claim 1, wherein one resource is configured within the slot, and the one resource is configured with multiple starting OFDM symbol positions available for transmitting the SL PRS and/or the physical channel.

9. The method according to claim 8, wherein the one resource is determined according to first resource configuration information.

10. The method according to claim 9, wherein the first resource configuration information is used for configuring at least one of:
multiple starting OFDM symbol positions of the resource, a number of OFDM symbols comprised in the resource, a bandwidth of the resource, a comb size of the resource, an RE offset of the resource, or a sequence identity of the SL PRS.

11. The method according to claim 10, wherein the number of OFDM symbols comprised in the resource is counted starting from a first starting OFDM symbol position among the multiple starting OFDM symbol positions.

12. The method according to claim 10 or 11, wherein the comb size of the resource is preconfigured, or configured by a network device.

13. The method according to claim 10 or 11, wherein the comb size of the resource is determined according to a number of OFDM symbols $N_{min}$ between a last starting OFDM symbol position among the multiple starting OFDM symbol positions and a last OFDM symbol of the resource.

14. The method according to claim 13, wherein the comb size of the resource is equal to $N_{min}$ minus 1.

15. The method according to any one of claims 9 to 14, wherein the first resource configuration information is preconfigured, or configured by a network device, or predefined.

16. The method according to claim 1, wherein one resource is configured within the slot, and the one resource is configured with a latest starting OFDM symbol position used for transmitting the SL PRS and/or the physical channel.

17. The method according to claim 16, wherein an OFDM symbol position at which the terminal device initiates transmission of the SL PRS and/or the physical channel is no later than the latest starting OFDM symbol position.

18. The method according to claim 16 or 17, further comprising:
initiating, by the terminal device, transmission of the SL PRS and/or the physical channel at a first OFDM symbol position after successful listen before talk (LBT), wherein the first OFDM symbol position is no later than the latest starting OFDM symbol position.

19. The method according to any one of claims 16 to 18, wherein the one resource is determined according to second resource configuration information, the second resource configuration information comprises first indication information, and the first indication information is used for indicating the latest starting OFDM symbol position.

20. The method according to claim 19, wherein the second resource configuration information is further used for configuring at least one of:
a number of OFDM symbols comprised in the resource, a bandwidth of the resource, a comb size of the resource, an RE offset of the resource, or a sequence identity of the SL PRS.

21. The method according to claim 20, wherein the comb size of the resource is preconfigured, or configured by a network device.

22. The method according to claim 20, wherein the comb size of the resource is determined according to a number of OFDM symbols $N_{min}$ between the latest starting OFDM symbol position and a last OFDM symbol of the resource.

23. The method according to claim 22, wherein the comb size of the resource is equal to $N_{min}$ minus 1.

24. The method according to claim 20, wherein the comb size of the resource is determined according to a number of OFDM symbols actually used for transmitting the SL PRS and/or the physical channel.

25. The method according to any one of claims 19 to 24, wherein the second resource configuration information is preconfigured, or configured by a network device, or predefined by a standard.

26. The method according to any one of claims 1 to 25, wherein the physical channel comprises a physical sidelink control channel (PSCCH) and/or a physical sidelink shared channel (PSSCH).

27. A wireless communication method, comprising:

transmitting, by a terminal device, a sidelink positioning reference signal (SL PRS) according to an SL PRS resource configured within a slot; and
transmitting a physical channel according to a physical channel resource configured within the slot, the physical channel being used for indicating transmission of the SL PRS;
wherein the physical channel resource is configured with multiple starting orthogonal frequency-division multiplexing (OFDM) symbol positions available for transmitting the physical channel, the SL PRS resource being subsequent to the physical channel resource; or
the SL PRS resource is configured with multiple starting OFDM symbol positions available for transmitting the SL PRS, the physical channel resource being subsequent to the SL PRS resource.

28. The method according to claim 27, wherein the physical channel resource being subsequent to the SL PRS resource comprises:
the physical channel resource being located within last m OFDM symbols available for sidelink transmission within the slot, wherein m is a positive integer.

29. The method according to claim 27 or 28, wherein the SL PRS resource is configured with multiple starting OFDM symbol positions available for transmitting the SL PRS, the SL PRS resource is determined according to first SL PRS resource configuration information, and the first SL PRS resource configuration information comprises at least one of:
multiple starting OFDM symbol positions of the SL PRS resource, a number of OFDM symbols of the SL PRS resource, a bandwidth of the SL PRS resource, a comb size of the SL PRS resource, an RE offset of the SL PRS resource, or a sequence identity of the SL PRS.

30. The method according to claim 29, wherein a number of OFDM symbols occupied by the SL PRS resource is counted starting from a first starting OFDM symbol position among the multiple starting OFDM symbol positions.

31. The method according to claim 29 or 30, wherein the comb size of the SL PRS resource is preconfigured, or configured by a network device.

32. The method according to claim 29 or 30, wherein the comb size of the SL PRS resource is determined according to a number of OFDM symbols $N_{min}$ between a last starting OFDM symbol position among the multiple starting OFDM symbol positions and a last OFDM symbol of the SL PRS resource.

33. The method according to claim 32, wherein the comb size of the SL PRS resource is equal to $N_{min}$ minus 1.

34. The method according to any one of claims 29 to 33, wherein the first SL PRS resource configuration information is preconfigured, or configured by a network device, or predefined.

35. The method according to any one of claims 27 to 34, wherein the physical channel comprises a physical sidelink control channel (PSCCH) and/or a physical sidelink shared channel (PSSCH).

36. A wireless communication method, comprising:
configuring, by a network device, one or more resources within a slot for a terminal device, wherein the one or more resources are used for the terminal device to transmit a sidelink positioning reference signal (SL PRS) and/or a physical channel, and the physical channel is used for indicating transmission of the SL PRS; wherein each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

37. The method according to claim 36, wherein multiple resources are configured within the slot, and each resource is configured with one starting OFDM symbol position available for transmitting the SL PRS and/or the physical channel.

38. The method according to claim 37, wherein the multiple resources correspond to different starting OFDM symbol positions available for transmitting the SL PRS and/or the physical channel.

39. The method according to claim 37 or 38, wherein there is an overlap between the multiple resources in time domain.

40. The method according to any one of claims 37 to 39, wherein each of the multiple resources is configured through corresponding resource configuration information, and starting OFDM symbol positions configured through resource configuration information corresponding to the multiple resources are different.

41. The method according to claim 40, wherein the resource configuration information is used for configuring at least one of:
a starting OFDM symbol position of the resource, a number of OFDM symbols comprised in the resource, a bandwidth of the resource, a comb size of the resource, a resource element (RE) offset of the resource, or a sequence identity of the SL PRS.

42. The method according to claim 36, wherein one resource is configured within the slot, and the one resource is configured with multiple starting OFDM symbol positions available for transmitting the SL PRS and/or the physical channel.

43. The method according to claim 42, wherein the one resource is configured through first resource configuration information.

44. The method according to claim 43, wherein the first resource configuration information is used for configuring at least one of:
multiple starting OFDM symbol positions of the resource, a number of OFDM symbols comprised in the resource, a bandwidth of the resource, a comb size of the resource, an RE offset of the resource, or a sequence identity of the SL PRS.

45. The method according to claim 44, wherein the number of OFDM symbols comprised in the resource is counted starting from a first starting OFDM symbol position among the multiple starting OFDM symbol positions.

46. The method according to claim 44 or 45, wherein the comb size of the resource is preconfigured, or configured by the network device.

47. The method according to claim 44 or 45, wherein the comb size of the resource is determined according to a number of OFDM symbols $N_{min}$ between a last starting OFDM symbol position among the multiple starting OFDM symbol positions and a last OFDM symbol of the resource.

48. The method according to claim 47, wherein the comb size of the resource is equal to $N_{min}$ minus 1.

49. The method according to claim 36, wherein one resource is configured within the slot, and the one resource is configured with a latest starting OFDM symbol position used for transmitting the SL PRS and/or the physical channel.

50. The method according to claim 49, wherein an OFDM symbol position at which the terminal device initiates transmission of the SL PRS and/or the physical channel is no later than the latest starting OFDM symbol position.

51. The method according to claim 49 or 50, wherein the one resource is configured through second resource configuration information, the second resource configuration information comprises first indication information, and the first indication information is used for indicating the latest starting OFDM symbol position.

52. The method according to claim 51, wherein the second resource configuration information is further used for configuring at least one of:
a number of OFDM symbols comprised in the resource, a bandwidth of the resource, a comb size of the resource, an RE offset of the resource, and a sequence identity of the SL PRS.

53. The method according to claim 52, wherein the comb size of the resource is preconfigured, or configured by the network device.

54. The method according to claim 52, wherein the comb size of the resource is determined according to a number of OFDM symbols $N_{min}$ between the latest starting OFDM symbol position and a last OFDM symbol of the resource.

55. The method according to claim 54, wherein the comb size of the resource is equal to $N_{min}$ minus 1.

56. The method according to claim 52, wherein the comb size of the resource is determined according to a number of OFDM symbols actually used for transmitting the SL PRS and/or the physical channel.

57. The method according to claim 36 or 56, wherein the physical channel comprises a physical sidelink control channel (PSCCH) and/or a physical sidelink shared channel (PSSCH).

58. A wireless communication method, comprising:

configuring, by a network device, a sidelink positioning reference signal (SL PRS) resource and a physical channel resource within a slot for a terminal device, wherein
the physical channel resource is configured with multiple starting orthogonal frequency-division multiplexing (OFDM) symbol positions available for transmitting a physical channel, the SL PRS resource being subsequent to the physical channel resource; or
the SL PRS resource is configured with multiple starting OFDM symbol positions available for transmitting an SL PRS, the physical channel resource being subsequent to the SL PRS resource.

59. The method according to claim 58, wherein the physical channel resource being subsequent to the SL PRS resource comprises:
the physical channel resource being located within last m OFDM symbols available for sidelink transmission within the slot, wherein m is a positive integer.

60. The method according to claim 58 or 59, wherein the SL PRS resource is configured with multiple starting OFDM symbol positions available for transmitting the SL PRS, the SL PRS resource is configured through first SL PRS resource configuration information, and the first SL PRS resource configuration information is used for configuring at least one of:
multiple starting OFDM symbol positions of the SL PRS resource, a number of OFDM symbols of the SL PRS resource, a bandwidth of the SL PRS resource, a comb size of the SL PRS resource, an RE offset of the SL PRS resource, or a sequence identity of the SL PRS.

61. The method according to claim 60, wherein a number of OFDM symbols occupied by the SL PRS resource is counted starting from a first starting OFDM symbol position among the multiple starting OFDM symbol positions.

62. The method according to claim 60 or 61, wherein the comb size of the SL PRS resource is preconfigured, or configured by the network device.

63. The method according to claim 60 or 61, wherein the comb size of the SL PRS resource is determined according to a number of OFDM symbols $N_{min}$ between a last starting OFDM symbol position among the multiple starting OFDM symbol positions and a last OFDM symbol of the SL PRS resource.

64. The method according to claim 63, wherein the comb size of the SL PRS resource is equal to $N_{min}$ minus 1.

65. The method according to any one of claims 60 to 64, wherein the first SL PRS resource configuration information is preconfigured, or configured by the network device, or predefined.

66. The method according to any one of claims 58 to 65, wherein the physical channel comprises a physical sidelink control channel (PSCCH) and/or a physical sidelink shared channel (PSSCH).

67. A terminal device, comprising:
a communication unit, configured to transmit a sidelink positioning reference signal (SL PRS) and/or a physical channel according to one or more resources configured within a slot, the physical channel being used for indicating transmission of the SL PRS, wherein each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

68. A terminal device, comprising:

a communication unit, configured to transmit a sidelink positioning reference signal (SL PRS) according to an SL PRS resource configured within a slot; and
transmit a physical channel according to a physical channel resource configured within the slot, the physical channel being used for indicating transmission of the SL PRS;
wherein the physical channel resource is configured with multiple starting orthogonal frequency-division multiplexing (OFDM) symbol positions available for transmitting the physical channel, the SL PRS resource being subsequent to the physical channel resource; or
the SL PRS resource is configured with multiple starting OFDM symbol positions available for transmitting the SL PRS, the physical channel resource being subsequent to the SL PRS resource.

69. A network device, comprising:
a communication unit, configured to configure one or more resources within a slot for a terminal device, wherein the one or more resources are used for the terminal device to transmit a sidelink positioning reference signal (SL PRS) and/or a physical channel by, and the physical channel is used for indicating transmission of the SL PRS; wherein each resource corresponds to one starting orthogonal frequency-division multiplexing (OFDM) symbol position available for transmitting the SL PRS and/or the physical channel, or the resource corresponds to multiple starting OFDM symbol positions available for transmitting the SL PRS and/or the physical channel.

70. A network device, comprising:

a communication unit, configured to configure a sidelink positioning reference signal (SL PRS) resource and a physical channel resource within a slot for a terminal device, wherein

the physical channel resource is configured with multiple starting orthogonal frequency-division multiplexing (OFDM) symbol positions available for transmitting a physical channel, the SL PRS resource being subsequent to the physical channel resource; or

the SL PRS resource is configured with multiple starting OFDM symbol positions available for transmitting an SL PRS, the physical channel resource being subsequent to the SL PRS resource.

71. A terminal device, comprising: a processor and a memory, wherein the memory is configured to store a computer program, the processor is configured to call the computer program stored in the memory and run the computer program, to perform the method according to any one of claims 1 to 26, or the method according to any one of claims 27 to 35.

72. A network device, comprising: a processor and a memory, wherein the memory is configured to store a computer program, the processor is configured to call the computer program stored in the memory and run the computer program, to perform the method according to any one of claims 36 to 57, or the method according to any one of claims 58 to 66.

73. A chip, comprising: a processor, configured to call a computer program from a memory and run the computer program, to enable a device equipped with the chip to perform the method according to any one of claims 1 to 26, or the method according to any one of claims 27 to 35, or the method according to any one of claims 36 to 57, or the method according to any one of claims 58 to 66.

74. A computer-readable storage medium, configured to store a computer program, wherein the computer program enables a computer to perform the method according to any one of claims 1 to 26, or the method according to any one of claims 27 to 35, or the method according to any one of claims 36 to 57, or the method of any one of claims 58 to 66.

75. A computer program product, comprising computer program instructions, wherein the computer program instructions enable a computer to perform the method according to any one of claims 1 to 26, or the method according to any one of claims 27 to 35, or the method according to any one of claims 36 to 57, or the method according to any one of claims 58 to 66.

76. A computer program, wherein the computer program enables a computer to perform the method according to any one of claims 1 to 26, or the method according to any one of claims 27 to 35, or the method according to any one of claims 36 to 57, or the method according to any one of claims 58 to 66.

FIG. 1

FIG. 2

Starting symbol          Symbol length

Frequency

Time

0  1  2  3  4  5  6  7  8  9  10  11  12  13

PSCCH   PSSCH   PSFCH   GP

FIG. 3

☐ PSSCH   ▦ PSCCH   ▨ DMRS   ▨ AGC   ▨ PSFCH   ■ GP

FIG. 4

| 0 | 1 | 2 | 3 | 4 | 5 | 6 | 7 | 8 | 9 | 10 | 11 | 12 | 13 |

▦ PSCCH   ▥ AGC   ▤ GAP   ▨ DMRS

FIG. 5

RE#0   RE#1   RE#2   RE#3   RE#4   RE#5   RE#6   RE#7   RE#8   RE#9   RE#10   RE#11

Port 0/Port 1   Port 0/Port 1   Port 0/Port 1   Port 0/Port 1   Port 0/Port 1   Port 0/Port 1

FIG. 6

PSCCH
frequency
domain
resource
indication

Subchannel
size

Frequency

Time

Subchannel start
RB index

FIG. 7

Slot 0 — Slot 1

Downlink
symbol

Flexible
symbol

Uplink
symbol

FIG. 8

One SFN period, 10240 subframes

0 1 2 3 4 5 6 7 8 9  158 159 160 161 162  318 319 320 321 322  10238 10239

Bitmap (1110000000)

Remaining
subframes

0 1 2 3 4 5 6 7 8 9 10 11 12 13  10108 10109

Subframes
belong to a
resource pool

0 1 2  3031 3032

First SFN period — Second SFN period

FIG. 9

FIG. 10

FIG. 11

60 MHz carrier bandwidth

| 20 MHz | 20 MHz | 20 MHz |
|---|---|---|
| RB set #0 | Guard band | RB set #2 | Guard band | RB set #3 |

FIG. 12

200

| Terminal device | | Network device |
|---|---|---|

S201, resource configuration information

S210, an SL PRS and/or a physical channel is transmitted according to one or more resources configured within a slot, where each resource corresponds to one or more starting OFDM symbol positions available for transmitting the SL PRS and/or the physical channel

FIG. 13

Resource #0

Resource #1

◄Resource #2►

Frequency

0 1 2 3 4 5 6 7 8 9 10 11 12 13

Time

FIG. 14

| SL-PRS/physical channel | | SL-PRS/physical channel |
|---|---|---|
| | | |
| SL-PRS/physical channel | | SL-PRS/physical channel |
| | | |
| SL-PRS/physical channel | | SL-PRS/physical channel |
| | | |
| SL-PRS/physical channel | | SL-PRS/physical channel |
| | | |
| SL-PRS/physical channel | | SL-PRS/physical channel |
| | | |
| SL-PRS/physical channel | | SL-PRS/physical channel |
| | | |
| SL-PRS/physical channel | | |

RE offset=0            RE offset=1

FIG. 15

Starting symbol=4

Starting symbol=0

Frequency $\longleftarrow$ ------------resource------------ $\longrightarrow$ | G P

0 1 2 3 4 5 6 7 8 9 10 11 12 13

Time

FIG. 16

300

> A terminal device transmits an SL PRS according to an SL PRS resource configured within a slot; and transmits a physical channel according to a physical channel resource configured within the slot, the physical channel being used for indicating transmission of the SL PRS, where the physical channel resource is configured with multiple starting orthogonal frequency-division multiplexing (OFDM) symbol positions available for transmitting the physical channel, the SL PRS resource being subsequent to the physical channel resource; or the SL PRS resource is configured with multiple starting OFDM symbol positions available for transmitting The SL PRS, the physical channel resource being subsequent to the SL PRS resource

S310

FIG. 17

> Terminal device 400
>> Communication unit 410

FIG. 18

> Terminal device 500
>> Communication unit 510

FIG. 19

> Network device 1000
>> Communication unit 1010

FIG. 20

Network device 1100

Communication unit 1110

FIG. 21

Communication device 600

Memory 620

Processor 610

Transceiver 630

FIG. 22

Chip 700

Input interface 730

Processor 710

Memory 720

Output interface 740

FIG. 23

Communication system 900

Terminal device 910

Network device 920

FIG. 24

## INTERNATIONAL SEARCH REPORT

| International application No. |
| --- |
| **PCT/CN2022/140987** |

| A. | CLASSIFICATION OF SUBJECT MATTER |
| --- | --- |

H04W64/00(2009.01)i; H04W72/0446(2023.01)i; H04W72/40(2023.01)i; H04L5/00(2006.01)i

According to International Patent Classification (IPC) or to both national classification and IPC

| B. | FIELDS SEARCHED |
| --- | --- |

Minimum documentation searched (classification system followed by classification symbols)

IPC:H04W,H04L

Documentation searched other than minimum documentation to the extent that such documents are included in the fields searched

Electronic data base consulted during the international search (name of data base and, where practicable, search terms used)

CNTXT, ENTXTC, DWPI, CNKI, IEEE, 3GPP: 边链路, 侧链路, 侧行链路, 直通链路, SL, 定位参考信号, PRS, SL-PRS, 时隙, 物理, 信道, 资源, 分配, 配置, 起始, 开始, 符号, sidelink, slot, physical, channel, resource, allocat+, configur+, start+, symbol, +start+symbol

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021129060 A1 (DATANG MOBILE COMMUNICATIONS EQUIPMENT CO., LTD.) 01 July 2021 (2021-07-01) description, page 1, lines 13-15, and page 17, line 5 to page 19, line 19 | 1-76 |
| A | CN 113273102 A (APPLE INC.) 17 August 2021 (2021-08-17) entire document | 1-76 |
| A | CN 114339987 A (SPREADTRUM COMMUNICATIONS (SHANGHAI) CO., LTD.) 12 April 2022 (2022-04-12) entire document | 1-76 |
| A | US 2022353718 A1 (QUALCOMM INC.) 03 November 2022 (2022-11-03) entire document | 1-76 |
| A | WO 2021232228 A1 (QUALCOMM INC.) 25 November 2021 (2021-11-25) entire document | 1-76 |
| A | WO 2022085894 A1 (LG ELECTRONICS INC.) 28 April 2022 (2022-04-28) entire document | 1-76 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **28 July 2023** | **02 August 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2022/140987** |

**C.    DOCUMENTS CONSIDERED TO BE RELEVANT**

| Category* | Citation of document, with indication, where appropriate, of the relevant passages | Relevant to claim No. |
| --- | --- | --- |
| A | HUAWEI et al. "Discussion on solutions to support SL positioning" *3GPP TSG-RAN WG1 Meeting #109-e, R1-2203164,* No. tsgr1_109-e, 20 May 2022 (2022-05-20), section 4 | 1-76 |
| A | ZTE. "Discussion on potential solutions for SL positioning" *3GPP TSG RAN WG1 #109-e, R1-2203624,* No. tsgr1_109-e, 20 May 2022 (2022-05-20), section 2 | 1-76 |

Form PCT/ISA/210 (second sheet) (July 2022)

**INTERNATIONAL SEARCH REPORT**
Information on patent family members

International application No.

**PCT/CN2022/140987**

| Patent document cited in search report | | | Publication date (day/month/year) | Patent family member(s) | | | Publication date (day/month/year) |
|---|---|---|---|---|---|---|---|
| WO | 2021129060 | A1 | 01 July 2021 | US | 2023050447 | A1 | 16 February 2023 |
| | | | | EP | 4084506 | A1 | 02 November 2022 |
| | | | | CN | 113055136 | A | 29 June 2021 |
| | | | | CN | 115276941 | A | 01 November 2022 |
| CN | 113273102 | A | 17 August 2021 | US | 2022116089 | A1 | 14 April 2022 |
| | | | | JP | 2022517937 | A | 11 March 2022 |
| | | | | WO | 2020146820 | A1 | 16 July 2020 |
| CN | 114339987 | A | 12 April 2022 | WO | 2022068836 | A1 | 07 April 2022 |
| US | 2022353718 | A1 | 03 November 2022 | WO | 2022232742 | A1 | 03 November 2022 |
| WO | 2021232228 | A1 | 25 November 2021 | KR | 20230011305 | A | 20 January 2023 |
| | | | | US | 2023209494 | A1 | 29 June 2023 |
| | | | | BR | 112022022734 | A2 | 31 January 2023 |
| | | | | EP | 4154554 | A1 | 29 March 2023 |
| | | | | CN | 115606201 | A | 13 January 2023 |
| | | | | IN | 202227052731 | A | 06 January 2023 |
| WO | 2022085894 | A1 | 28 April 2022 | KR | 20230092952 | A | 26 June 2023 |

Form PCT/ISA/210 (patent family annex) (July 2022)